# EUROPEAN PATENT APPLICATION

(11) **EP 1 648 189 A1**
(43) Date of publication of application: **19.04.2006**
(21) Application number: 05250401.6
(22) Date of filing: 26.01.2005
(51) Int. Cl.: H04Q 7/38

(54) **Method of controlling sharing of radio resources in mobile communication system**

(30) Priority: 15.10.2004 JP 2004301452
(71) Applicant: FUJITSU LIMITED, Kawasaki-shi, Kanagawa 211-8588 (JP)
(72) Inventor: Minami, Shinji, c/o Fujitsu Network Technologies, Yokohama-shi Kanagawa 222-0033 (JP); Oishi, Yuichiro, c/o Fujitsu Network Technologies, Yokohama-shi Kanagawa 222-0033 (JP); Seguchi, Yoshiyuki, c/o Fujitsu Network Technolog., Yokohama-shi Kanagawa 222-0033 (JP)
(74) Representative: Hitching, Peter Matthew

(57) **Abstract**

A radio network controller in a mobile communication network detects characteristics of mobile devices that are wirelessly connected to a radio base station managed by the radio network controller. The radio network controller decides whether the mobile devices can be classified into at least one group according to the detected characteristics. When it is decided that the mobile devices can be classified into at least one group, radio base stations to which the mobile devices can be wirelessly connected are changed according to the classified group so that radio resources in the radio base stations can be uniformly used. By sharing the radio resources owned by a radio base station, the radio resources under the control of the radio network controller can be effectively utilized.

## Description

### CROSS-REFERENCE TO RELATED APPLICATIONS

This application is based upon and claims the priority of Japanese Patent Application No. 2004-301452, filed on October 15, 2004, the contents being incorporated herein by reference.

### BACKGROUND OF THE INVENTION

### 1) Field of the Invention

The present invention relates to a method of controlling the sharing of radio resources to effectively utilize radio resources under control of a radio network controller (RNC) in a radio access network (RAN) based on a wideband code division multiple access (W-CDMA).

### 2) Description of the Related Art

Along with the rapid distribution of portable telephones in recent years, portable telephones are widely used to handle various multimedia services such as sound, moving images, and data communications. Among others, the role of data communications is increasing. The W-CDMA system is a standardized system to provide high-quality multimedia services at a high speed. Recently, the appearance of fixed-rate utilization services and the implementation of a high speed downlink packet access (HSDPA) system that realizes a standardized downlink capacity of maximum 14.4 Mbps (megabits per second) in a third generation partnership project (3GPP) are expected to further increase data communications. Not only standardization of downlink communication techniques, but standardization of high speed uplink packet access (HSUPA) that becomes uplink high-speed communication techniques, is progressing in its application to bidirectional communication services such as television meetings. The HSUPA realizes high-speed uplink communications from mobile devices to radio base stations. A dramatic increase in data communications from now on can be anticipated.

Along with the rapid increase in data communications from now on, it is clear that data communication resources in the radio network and, in particular, in the radio resources of the radio network controller (RNC) and base stations (BS) under this command are depleted. The depletion of radio resources is a significant problem in a current mobile communication network as well, and efficient utilization of radio resources is required. In the present specification, the radio resources refer to radio bands that can be allocated to mobile devices that are connected to radio base stations.

When a network is based on cables, the number of devices that carry out data communications through the network is fixed to some extent, and the network can be designed according to the environment. However, in mobile communications, the number of mobile units to which communications are connected depends on the movement of users. Therefore, it is difficult to implement an optimum installation, of machines, that takes congestion into account.

One of methods of solving the problems is to install an RNC and the radio base stations under its command by assuming a maximum number of permissible connections. This requires an enormous amount of facility investment, and cannot be a realistic method of solving the problems from the viewpoint of cost.

Particularly, when users move in a group on vehicles such as trains and buses, plural mobile units may hand over all together. This has a risk of rapid depletion of radio resources in the radio base stations at the handover locations.

In event sites and stations where people come together, there is also a similar risk of rapid depletion of radio resources that radio stations in the corresponding areas have. This brings about a phenomenon that data communications cannot be carried out. Therefore, the problem cannot be solved by simply increasing facility investment, and techniques for efficiently using radio resources are necessary.

As a technique for efficiently using radio resources, "a method of dispersing traffic in a mobile communication system" described in Japanese Patent Application Unexamined Publication No. 2000-175243 is publicly known. According to the technique described in this publication, when a communication channel that is used in a radio base station exceeds a certain threshold value, a radio unit is handed over to other adjacent base station.

Further, "a packet data band control method and a packet exchange system in a packet exchange network" described in Japanese Patent Application Unexamined Publication No. 11-136255 is publicly known. According to the technique described in this publication, a radio network controller in a mobile device has an individual transmission band and a shared band in advance. The mobile device switches over between the transmission bands to efficiently use the radio resources.

These conventional techniques, however, have the following problems.

According to the technique described in Japanese Patent Application Unexamined Publication No. 2000-175243, triggered by depletion of communication channels in a base station, a radio base station is handed over to the other base station that has room in radio channels, at this time. However, when many users move in trains or buses, for example, these users may hand over together. In this case, sudden congestion occurs in the radio base station at the handover location, and radio resources cannot be secured for these users.

It is also difficult to avoid total congestion in the radio access network (RAN).

According to the technique described in Japanese Patent Application Unexamined Publication No. 11-136255, transmission bands to be used are switched over based on traffic variation for each connection, thereby effectively utilizing the transmission bands. However, the method of managing radio resources, classified by quality of service class (QoS), to guarantee a band for each user has the following problems.
(1) When the transmission bands are separately provided as individual transmission bands and a shared transmission band, the QoS band guarantee cannot be achieved in some cases. In other words, under the separated provision of transmission bands into individual transmission bands and a shared transmission band, when the traffic of the QoS band-guaranteed users who shift to the shared band increases, these users need to be shifted to the individual transmission bands again. However, despite the fact that bands are guaranteed to these users when the individual bands are in shortage, the users cannot be shifted to the individual bands, and the bands cannot be guaranteed.
(2) It is impossible to avoid congestion of the radio resources in the radio base station itself. In other words, according to the technique described in Japanese Patent Application Unexamined Publication No. 11-136255, the transmission band switch control is carried out within only the same radio base station. Therefore, when congestion occurs in the radio resources of the radio base station, this congestion cannot be avoided even if the transmission bands are switch-controlled.
(3) When the number of band-guaranteed users increases, the securing of individual transmission bands increases correspondingly. In other words, in order to respond to the increase in the number of band-guaranteed users in future, it is necessary to prepare many individual transmission bands. However, because the total necessary number of radio resources in the base station does not change, this does not lead to the effective utilization of the radio resources.

### SUMMARY OF THE INVENTION

The present invention is made to solve the above problems. According to a first aspect of the present invention, a method of controlling a sharing of radio resources is provided. According to this method, a radio network controller in a mobile communication network detects characteristics of mobile devices that are wireless connected to radio base stations managed by the radio network controller, and decides whether the mobile devices can be classified into at least one group according to the detected characteristics. When it is decided that the mobile devices can be classified into at least one group, radio base stations to which mobile devices are to be wireless connected are changed such that radio resources of the radio base stations can be uniformly used according to the classified group, thereby sharing the radio resources of the radio stations.

According to a second aspect of the present invention, a characteristic of the mobile device is any one of move record information that shows moves of the mobile device between radio base stations, radio field intensity received by the mobile device, and quality-of-service information of the mobile device.

According to a third aspect of the present invention, in the first or the second aspect, the radio network controller determines radio base stations to which mobile devices are to be connected so as to avoid congestion in the radio base station, by utilizing the detected characteristics of the mobile devices, and hands over the mobile devices to the radio base stations at the determined connection destinations.

According to the first aspect of the present invention, characteristics of mobile devices are detected, and the mobile devices are grouped corresponding to the characteristics. Distribution of radio resources can be controlled so that the radio resources are uniformly used corresponding to states of the radio resources, in groups to which the mobile devices are classified corresponding to the characteristics. Therefore, the total radio resources can be effectively utilized in the total radio access network (RAN).

According to the second or the third aspect, it is possible to detect congestions of radio resources due to fixed factors, such as a concentration of mobile devices, in an event site or the like. It is also possible to obtain move record information of mobile devices or radio field intensity received by each mobile device. In both cases, by utilizing the move record information of mobile devices or the radio field intensity received by each mobile device detected in advance, radio base stations to which the mobile devices can be shifted are determined, when congestion occurs in the radio resources. Based on this decision, the mobile devices in the congested radio base stations are handed over to other non-congested radio base stations. As a result, it becomes possible to avoid congestions of radio resources due to fixed factors, such as a concentration of mobile devices, in an event site or the like. Further, by uniformly distributing the radio resources to peripheral radio base stations, the radio resources in the radio access network (RAN) can be effectively utilized.

According to a fourth aspect of the present invention, in controlling the distribution of radio resources corresponding to characteristics of mobile devices, when quality-of-service information (QoS) band-guaranteed mobile devices are present, the QoS band-guaranteed mobile devices can share idle resources that are not actually used by other band-guaranteed mobile devices, thereby uniformly sharing the radio resources. As a result, it becomes possible to uniformly distribute the radio resources more effectively.

It is necessary to guarantee bands to QoS band-guaranteed mobile devices even when these mobile devices are not actually using resources. Therefore, radio resources of guaranteed bands are always secured. However, along with the trend of band expansion in future, there is a risk of congestion in radio base stations due to the securing of bands at all times regardless of presence of radio resources that are not actually used. According to the present invention, mobile devices having the same characteristics of mobile devices can share the unused bands. Therefore, congestion in radio base stations due to presence of a large number of unused radio resources can be avoided.

According to a fifth aspect of the present invention, move characteristics of mobile devices are detected and are grouped in advance. With this arrangement, it becomes possible to forecast a mass handover when the mobile devices move in trains or buses. It is possible to forecast a shortage in radio resources at a move destination following the mass handover. When a shortage of resources in the destination radio base station is detected, radio base stations to which mobile devices are to be handed over, other than the destination radio base station, are determined based on the characteristics of mobile devices so that the radio resources can be used uniformly. By sequentially handing over the mobile devices to the radio base stations at the handover destinations, congestion in the destination radio base station due to the mass handover can be avoided. Further, the radio resources in the peripheral radio base stations can be distributed uniformly. As a result, radio resources in the radio access network (RAN) can be effectively utilized.

### BRIEF DESCRIPTION OF THE DRAWINGS

Fig. 1 is a block diagram of a system configuration of a known W-CDMA;
Figs. 2A and 2B show a block diagram of a configuration of a radio network controller (RNC) that is commonly used in all embodiments of the present invention;
Fig. 3 is a sequence diagram of a part of the operation of a move characteristic classifying unit 810 within the RNC shown in Fig. 2 according to a first embodiment (corresponding to claim 2) of the present invention;
Fig. 4 is a sequence diagram of the operation that continues from Fig. 3;
Fig. 5 is a sequence diagram of a part of the operation of a radio field intensity characteristic classifying unit 820 within the RNC shown in Fig. 2 according to a second embodiment (corresponding to claim 3) of the present invention;
Fig. 6 is a sequence diagram of a part of the operation of a QoS band characteristic classifying unit 830 within the RNC shown in Fig. 2 according to a third embodiment (corresponding to claim 4) of the present invention;
Figs. 7A and 7B show a sequence diagram of a part of a radio resource sharing operation within the RNC shown in Fig. 2 triggered by a mass handover of mobile devices, according to a fourth embodiment of the present invention;
Figs. 8A and 8B show a sequence diagram of the operation that continues from Fig. 7B;
Figs. 9A and 9B show a sequence diagram of a part of a radio resource sharing operation due to congestion in a radio base station triggered by a call setting, according to a fifth embodiment of the present invention;
Fig. 10 is a sequence diagram of the operation that continues from Fig. 9B;
Figs. 11A and 11B show a sequence diagram of a part of a radio resource sharing operation when a radio base station is congested triggered by a completion of handover, according to a sixth embodiment of the present invention;
Fig. 12 is a sequence diagram of the operation that continues from Fig. 11B;
Fig. 13 is a configuration diagram of a cell 1 to a cell 14, to which radio waves reach from radio base stations BS1 to BS14, that are managed by the radio network controller RNC;
Fig. 14 is the configuration diagram of the cells 1 to 14, where mobile devices UEs move from the cell 3 to the cell 14 via the cells 4 and 5 as shown by an arrow mark;
Fig. 15 is a radio resource management table showing an example according to a first example of the present invention;
Fig. 16 is a handover record data table showing an example according to the first example of the present invention;
Fig. 17 is the radio resource management table updated after a mobile device (i.e., a user terminal ) UE1 is handed over according to the first example of the present invention;
Fig. 18 is the table of move record data updated after the mobile device UE1 is handed over according to the first example of the present invention;
Fig. 19 is the radio resource management table updated after a mobile device UE4 is handed over according to the first example of the present invention;
Fig. 20 is the table of move record data updated after the mobile device UE4 is handed over according to the first example of the present invention;
Fig. 21 is a table of data classified according to move characteristics after the mobile device UE4 is handed over according to the first example of the present invention;
Figs. 22A and 22B show a table of a radio quality management database according to a second example of the present invention;
Figs. 23A and 23B are the table of radio quality management database updated after a report of radio field intensity from a mobile device UE11 according to the second example of the present invention;
Fig. 24 is a table of data classified according to radio field intensity after a report of radio field intensity in the mobile device UE11 according to the second example of the present invention;
Fig. 25 is a table of data classified according to characteristics of QoS bands showing an example according to a third example of the present invention;
Fig. 26 is a table of data classified according to characteristics of QoS bands after a call setting of a mobile device UE9 according to the third example of the present invention;
Fig. 27 is a table of handover record correction data after the mobile device UE1 is handed over according to a fourth example of the present invention;
Fig. 28 is the table of data classified according to move characteristics updated after determining radio base stations to which mobile devices are to move according to the fourth example of the present invention;
Fig. 29 is the radio resource management table updated after completing handover of the mobile device UE1 according to the fourth example of the present invention;
Fig. 30 is the handover record data table updated after completing handover of the mobile device UE1 according to the fourth example of the present invention;
Fig. 31 is the classified data table updated according to move characteristics after completing handover of the mobile device UE1 according to the fourth example of the present invention;
Fig. 32 is a table of handover record correction data at handover times of the mobile devices UE 1, 2, 3, and 4 according to the fourth example of the present invention;
Fig. 33 is a radio resource management table after completing handover of all mobile devices according to the fourth example of the present invention;
Fig. 34 is a table of handover record data after completing handover of all mobile devices according to the fourth example of the present invention;
Fig. 35 is the classified data table updated according to move characteristics after completing handover of all mobile devices according to the fourth example of the present invention;
Fig. 36 is a radio resource management table showing an example according to a fifth example of the present invention;
Fig. 37 is an updated table of data classified according to radio field intensity at a congestion time of a cell 11 triggered by a call setting according to the fifth example of the present invention;
Fig. 38 is an updated radio resource management table after avoiding congestion in the cell 11 triggered by a call setting according to the fifth example of the present invention;
Fig. 39 is a radio resource management table showing an example according to a sixth example of the present invention;
Fig. 40 is an updated radio resource management table at a congestion time of the cell 11 triggered by a handover according to the sixth example of the present invention;
Fig. 41 is an updated radio resource management table after avoiding congestion in the cell 11 triggered by a handover according to the sixth example of the present invention;
Fig. 42 is a table of data classified according to characteristics of radio field intensity showing an example according to a seventh example of the present invention;
Fig. 43 is a table of data classified according to QoS showing an example according to the seventh example of the present invention;
Fig. 44 is a radio resource management table showing an example according to the seventh example of the present invention; and
Fig. 45 is an updated table of data classified according to radio field intensity according to the seventh example of the present invention.

### DETAILED DESCRIPTIONS

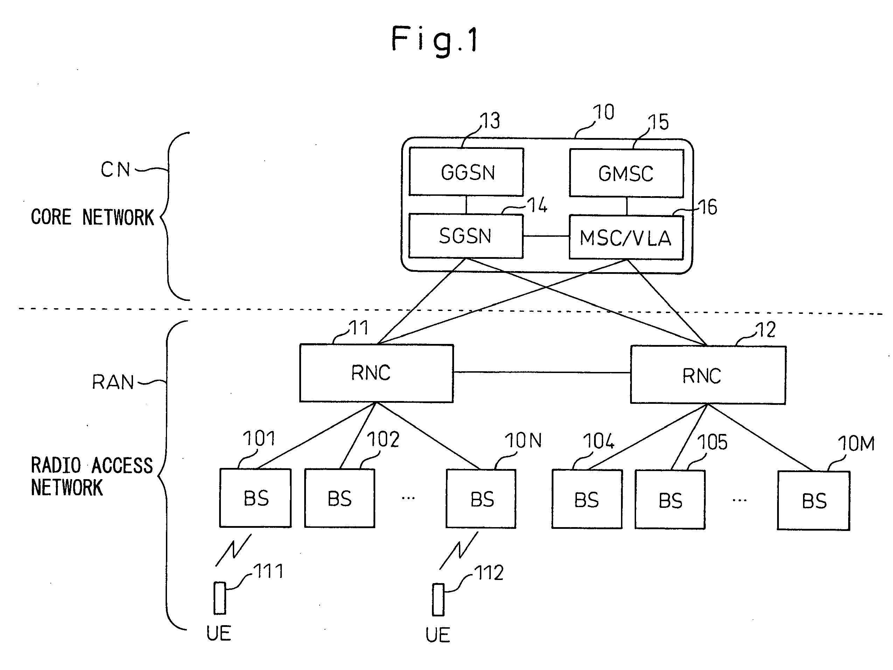

Fig. 1 is a block diagram of a system configuration of a known W-CDMA. In Fig. 1, the W-CDMA system is classified into a radio access network RAN and a core network CN. The radio access network RAN includes radio network controllers (RNCs) 11, 12, etc., radio base stations (BSs) 101 to 10N, and 104 to 10M, and user terminals (UEs) 111, 112, etc.

The core network CN includes a gateway general packet radio service (GPRS) support node (GGSN) 13 as a point of interface with a packet network, a serving GPRS support node (SGSN) 14 that is connected to the GGSN 13, a gateway mobile switching center (MSC) (GMSC) 15, and a mobile service switching center (MSC)/visitor location register (VLA) 16 that is connected to both the GMSC 15 and the SGSN 14. The SGSN 14 is an inter-working unit to a connectionless backbone network such as an IP (Internet Protocol) network. This node carries out position management of GPRS users, security management, and access control. The MSC is an inter-working unit to a connection-oriented backbone network such as ISDN (Integrated Services Digital Network).

The radio network controller (hereinafter, also referred to as RNC) 11 manages the plural radio base stations 101 to 10N under its control, and the RNC 12 manages the radio base stations (hereinafter, also referred to as BS) 104 to 10N under its control. The RNC 11 and the RNC 12 are connected to each other. Each RNC carries out control of a radio circuit between a radio base station and a user terminal, control of radio resources that each radio base station has, call connection control, move control (i.e., control at a handover time), communication speed control, etc.

Each RNC is also connected to the SGSN 14 and the MSC/VLR 16 within the core network CN. The core network CN carries out position control of each user terminal UE, call control, service control, etc. via the RNC and the BS.

When a user terminal UE transmits a call, a radio network controller RNC receives a call connection request from the user terminal UE via a radio base station (BS). The radio network controller RNC controls a radio circuit and controls a radio resource based on information (such as a speed) that the user terminal UE requests.

As information necessary to hand over the user terminal UE, the radio network controller RNC transmits the user terminal UE peripheral cell information about areas (cells) to which radio waves from the radio base station (BS) belonging to the user terminal UE can reach. At a call arrival time, the radio network controller RNC makes a paging request to plural radio base stations that are present near the user terminal. When a response from the user terminal is correctly received, the radio network controller RNC carries out radio circuit control and radio resource control in a similar manner to that at the call transmission time.

A user terminal UE can receive radio waves from plural radio stations BSs, and measures communication quality (for example, radio field intensity) based on the peripheral cell information notified from a radio network controller RNC. When a user terminal UE detects a cell of higher quality than that of a current cell, the user terminal UE sends the radio network controller RNC a request to hand over a call to this cell via the BS within the current cell. The radio network controller RNC decides whether it is possible to hand over the call, based on the communication quality advised from the user terminal UE. When it is decided that the handover is possible, the radio network controller RNC adds a radio link to a radio base station of a handover destination. When the setting of the radio link is completed, the radio network controller RNC carries out a radio circuit control to the user terminal that makes the handover request, to be linked to the radio base station of the handover destination. Upon completion of the radio circuit control to the user terminal, the radio network controller RNC updates the peripheral cell information.

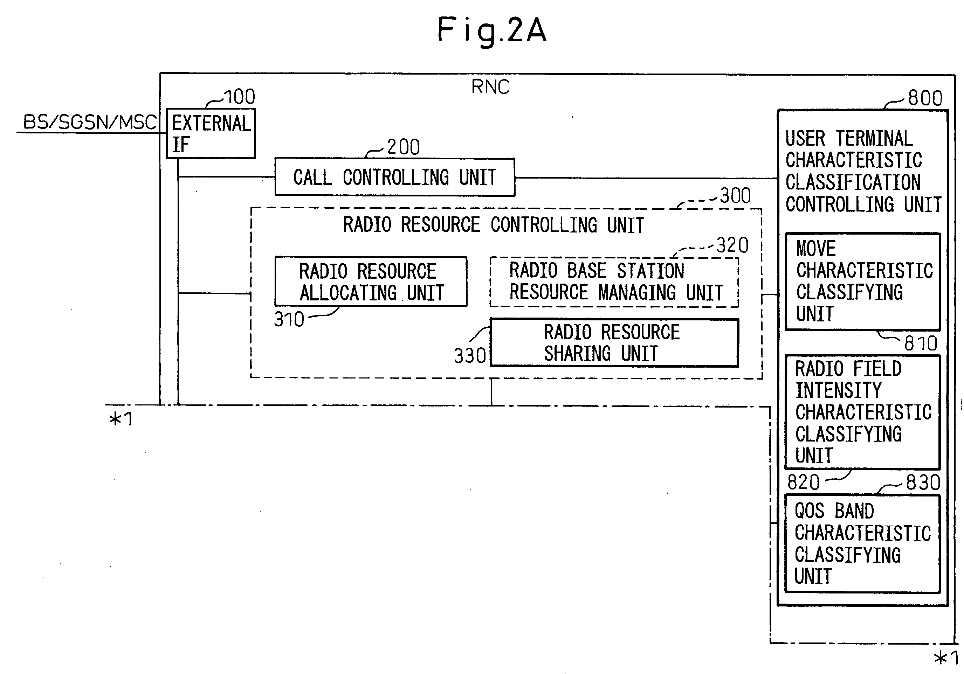

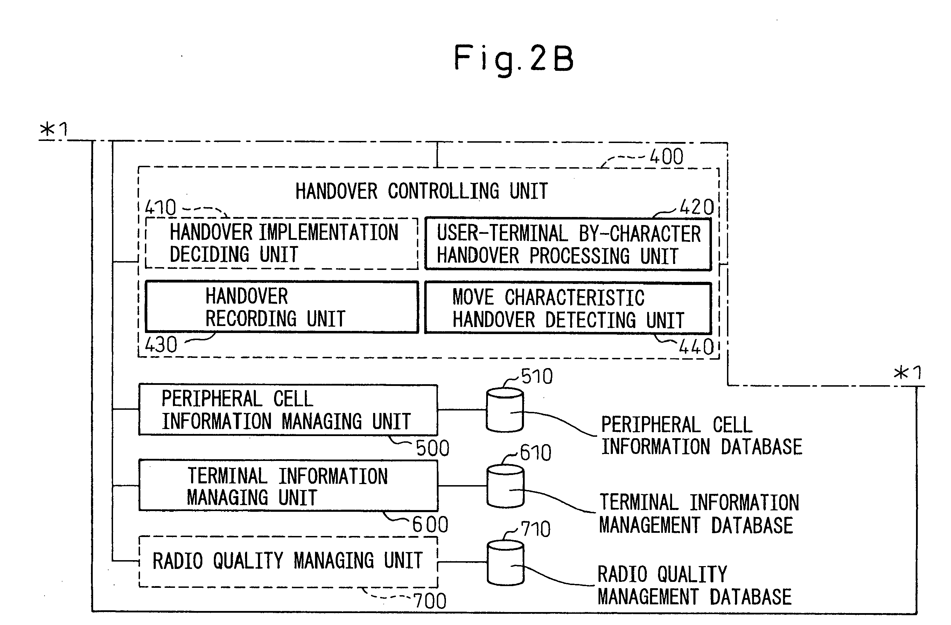

Figs. 2A and 2B show a block diagram of a configuration of a radio network controller (RNC) that is commonly used in all embodiments of the present invention. In Figs. 2A and 2B, blocks surrounded by dotted lines indicate parts that are reorganized according to the present invention, and blocks surrounded by thick lines indicate parts added according to the present invention.

The RNC includes an external interface (IF) 100, a call controller 200, a radio resource controller 300, a handover controller 400, a peripheral cell information manager 500, a terminal information manager 600, a radio quality manager 700, and a user terminal characteristic classification controller 800.

The external IF 100 exchanges messages with counter nodes, and gives information to each node.

The call controller 200 carries out call control system processing such as a call setting, a call release, a handover request, a handover completion, and a speed change request. The call controller 200 requests the radio resource controller 300 to secure resources, and requests the handover controller 400 to carry out a handover.

The radio resource controller 300 is a part reorganized according to the present invention, and forms a main controller of radio resource control. The radio resource controller 300 includes a radio resource allocating unit 310, a radio base station resource managing unit 320, and a radio resource sharing unit 330.

The radio resource allocating unit 310 manages resources for each user terminal and for each radio base station, when radio resources change at a call setting time and a call release time.

The radio base station resource managing unit 320 is a part reorganized according to the present invention. The radio base station resource managing unit 320 detects congestion in a specific radio base station from a table of resource management for each radio base station, and requests the radio resource sharing unit 330 to share radio resources.

The radio resource sharing unit 330 is a part reorganized according to the present invention. Upon receiving a request for sharing radio resources from the radio base station resource managing unit 320 or the handover controller 400, the radio resource sharing unit 330 determines a handover destination of each user terminal to disperse radio resources based on characteristics of a specific user terminal, and transmits the decision to the handover controller 400.

The handover controller 400 is a part reorganized according to the present invention, and forms a main controller of handover control. The handover controller 400 includes a handover implementation deciding unit 410, a user-terminal by-character handover processing unit 420, a handover recording unit 430, and a move characteristic handover detecting unit 440.

The handover implementation deciding unit 410 is a part reorganized according to the present invention. Based on a handover request from a user terminal, the handover implementation deciding unit 410 decides whether the handover is possible. When it is decided that the handover is necessary, the handover implementation deciding unit 410 implements the handover.

The user-terminal by-character handover processing unit 420 is a part reorganized according to the present invention. Upon receiving a handover request according to a characteristic of a specific user terminal, the user-terminal by-character handover processing unit 420 implements the handover guided by the radio network controller (RNC) based on this characteristic.

The handover recording unit 430 is a part reorganized according to the present invention. When a notice of completion of a handover of a user terminal is received from the handover controller 400, the handover recording unit 430 generates and manages record information containing a radio base station at a handover destination and a handover time of each user terminal.

The move characteristic handover detecting unit 440 is a part reorganized according to the present invention. When a handover request from a user terminal is received from the handover controller 400, the move characteristic handover detecting unit 440 decides whether the requested user terminal is classified according to the move characteristics. When it is decided that the user terminal is classified according to the move characteristics, the handover controller 400 requests the radio resource sharing unit 330 to disperse the radio resources according to the move characteristics. When the handover-requested user terminal is not classified according to the move characteristics, the move characteristic handover detecting unit 440 informs the handover controller 400 that the handover according to the move characteristics is not necessary.

The peripheral cell information manager 500 manages cell information of radio network controllers using a peripheral cell information management database (DB) 510. The peripheral cell information management database 510 that is connected to the peripheral cell information manager 500 is a peripheral cell information database managed by the radio network controllers (RNC).

The terminal information manager 600 manages information of user terminals using a terminal information database (DB) 610. The terminal information database 610 that is connected to the terminal information manager 600 is a database used to manage QoS classes of user terminals and contract services.

The radio quality manager 700 is a part reorganized according to the present invention. Based on a radio field intensity report from a user terminal, the radio quality manager 700 manages radio quality of the user terminal, and transmits a request for classifying data according to characteristics of the radio field intensity, to a radio field intensity characteristic classifying unit 820. A radio quality management database (DB) 710 is connected to the radio quality manager 700 so that the radio quality manager 700 manages radio field intensity reports sent from user terminals based on this database.

The user terminal characteristic classification controller 800 is a new part according to the present invention, and is a main controller that controls classification of characteristics of user terminals. The user terminal characteristic classification controller 800 includes a move characteristic classifying unit 810, the radio field intensity characteristic classifying unit 820, and a QoS band characteristic classifying unit 830.

The move characteristic classifying unit 810 refers to handover record data of user terminals generated by the handover recording unit 430, detects characteristics of a mass move, and generates data classified according to move characteristics.

The radio field intensity characteristic classifying unit 820 is a new part according to the present invention. The radio field intensity characteristic classifying unit 820 detects characteristics based on radio quality such as radio field_intensity managed by the radio quality manager 700, and generates data classified according to characteristics of the radio quality.

The QoS band characteristic classifying unit 830 is a new part according to the present invention. The QoS band characteristic classifying unit 830 extracts characteristics by quality of service (QoS) guarantee bands of user terminals, and generates data classified according to QoS characteristics.

### First Embodiment

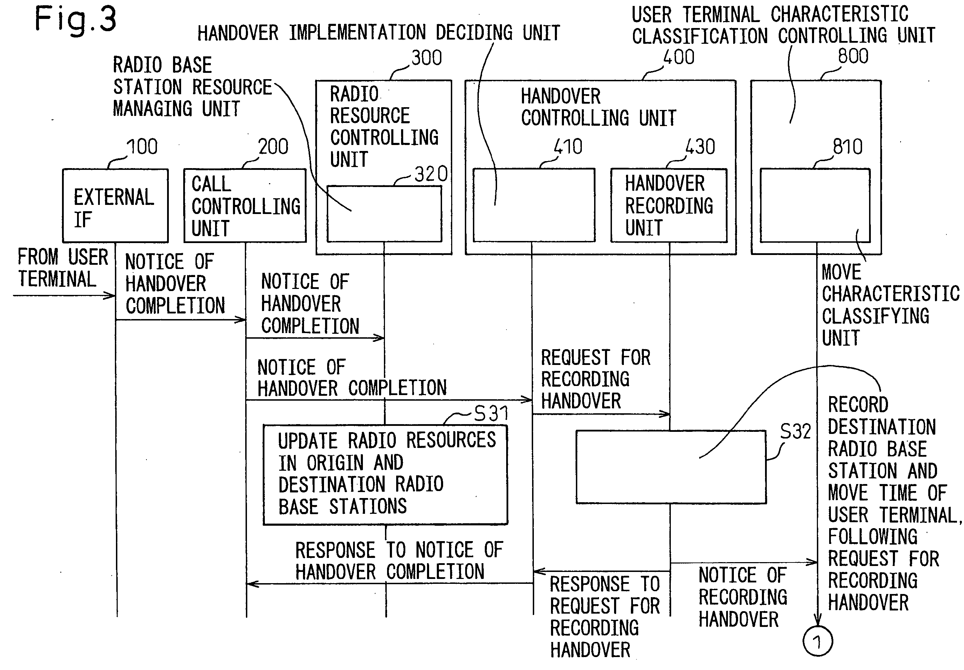

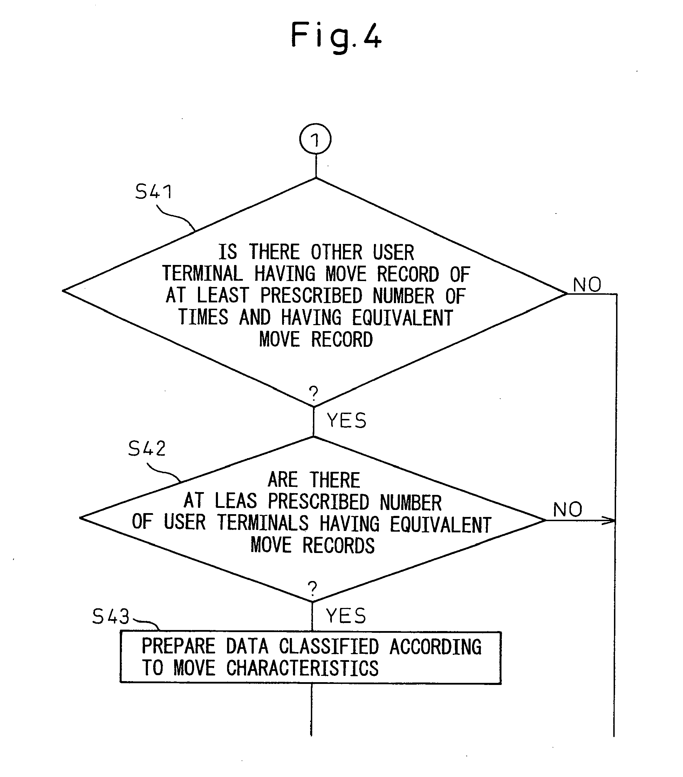

Fig. 3 and Fig. 4 are sequence diagrams of the operation of the move characteristic classifying unit 810 within the RNC shown in Fig. 2 according to a first embodiment (corresponding to claim 2) of the present invention.

Referring to Fig. 3 when the external IF 100 completes a handover following a handover request from a user terminal UE, the external IF 100 transmits a handover completion notice to the call controller 200. The call controller 200 transmits a handover completion notice containing an identification number of the user terminal UE and destination radio base station information, to both the radio resource controller 300 and the handover controller 400.

The radio resource controller 300 sends the handover completion notice to the radio base station resource managing unit 320 in order to update radio resources used in each radio base station. The radio base station resource managing unit 320 receives this handover completion notice, and subtracts radio resources used in the origin radio base station and adds radio resources used in a destination radio base station, at step S31, according to the radio resources used by the user terminal UE in the origin radio base station and in the destination radio base station, respectively.

The handover controller 400 transmits the handover completion notice to the handover implementing unit 410. The handover implementing unit 410 completes the handover. The handover implementing unit 410 also transmits a handover recording request to the handover recording unit 430 in order to keep a move record of the user terminal UE. The handover recording unit 430, at step S32, records a destination radio base station and a move time of the user terminal, and transmits a handover record containing an identification number of the user terminal as additional information. The handover recording unit 430 also transmits a handover record response to the handover implementing unit 400.

When receiving the handover record, the user terminal characteristic classification controller 800 transmits a request for classifying data according to move characteristics, to the move characteristic classifying unit 810, by using the user terminal identification number as additional information.

At step S41 shown in Fig. 4, the move characteristic classifying unit 810 refers to the move record information prepared by the handover recording unit 430, and decides whether there is other user terminal that has a record of move of at least a prescribed number of times and that has also an equivalent move record. When a decision made at step S41 is yes, the move characteristic classifying unit 810 decides whether there are at least a prescribed number of user terminals that have equivalent move records, at step S42. When a decision made at step S42 is yes, the move characteristic classifying unit 810 decides, at step S43, that plural user terminals have characteristics in the move, and prepares data classified according to the move characteristics.

When the handover recording unit 430 responds the handover record, the handover implementing unit 410 responds a handover completion notice to the call controller 200.

### Second Embodiment

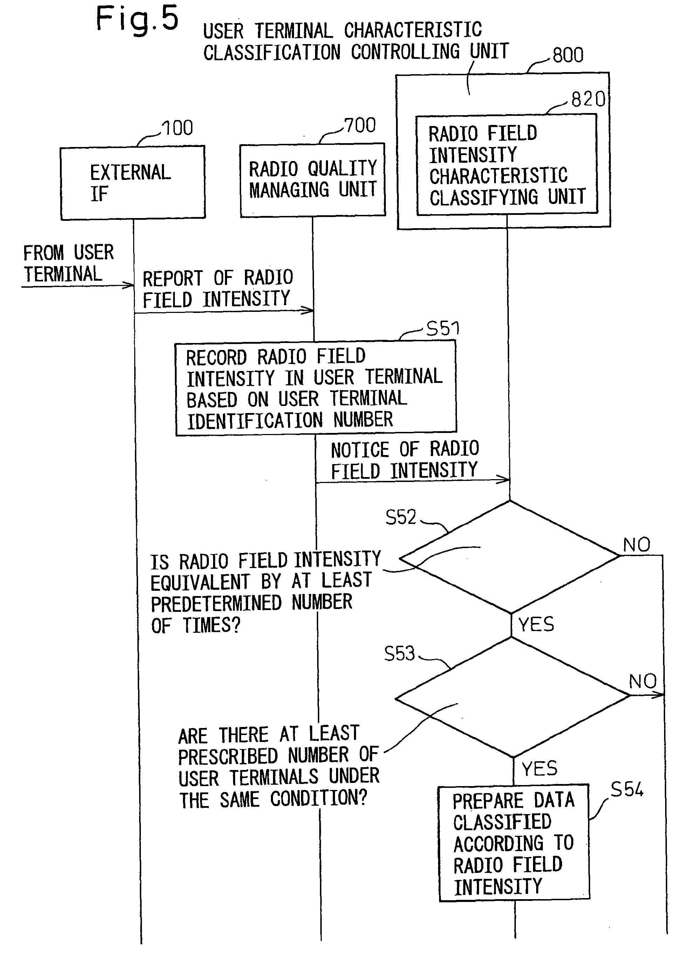

Fig. 5 is a sequence diagram of the operation of the radio field intensity characteristic classifying unit 820 within the RNC shown in Fig. 2 according to a second embodiment (corresponding to claim 3) of the present invention. Referring to Fig. 5, the external IF 100 receives a radio field intensity report from a user terminal UE, and transmits the radio field intensity report to the radio quality manager 700. At step S51, the radio quality manager 700 records the radio field intensity in the user terminal into the radio quality management database 710 based on a user terminal identification number and the radio field intensity in peripheral cells from the user terminal.

The radio quality manager 700 receives the radio field intensity report, and transmits the radio field intensity report to the user terminal characteristic classification controller 800, by using the user terminal identification number as additional information, in order to detect data classified according to characteristics of radio field intensity in user terminals. The user terminal characteristic classification controller 800 receives the radio field intensity report, and transmits a request for classifying data according to the characteristics of radio field intensity, to the radio field intensity characteristic classifying unit 820.

The radio field intensity characteristic classifying unit 820 refers to the radio quality management database 710, and decides whether the radio field intensity is equivalent by at least a predetermined number of times prescribed at step S52. When a decision made at step S52 is yes, the radio field intensity characteristic classifying unit 820 decides, at step S53, whether there are at least a prescribed number of user terminals under the same condition. When a decision made at step S53 is yes, the radio field intensity characteristic classifying unit 820, at step S54, decides that plural user terminals have characteristics in the radio field intensity, and prepares data classified according to the radio field intensity.

### Third Embodiment

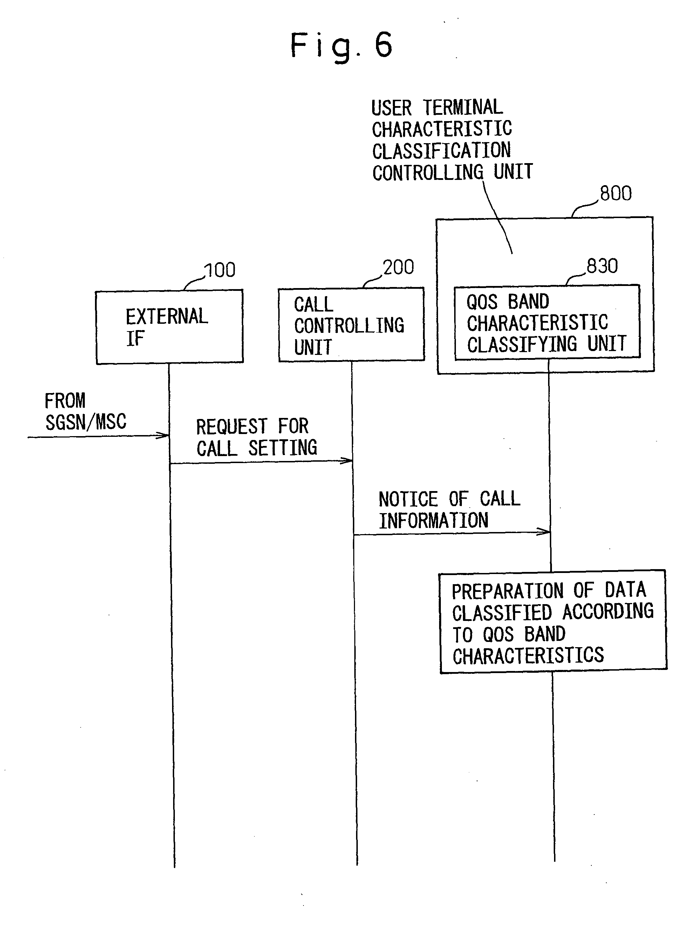

Fig. 6 is a sequence diagram of the QoS band characteristic classifying unit 830 within the RNC shown in Fig. 2 according to a third embodiment (corresponding to claim 4) of the present invention. Referring to Fig. 6, the external IF 100 receives a call setting request from the SGSN or the MSC at the core network CN side, and transmits this call setting request to the call controller 200. The call controller 200 transmits a call information notice to the user terminal characteristic classification controller 800, the call information notice containing extracted information of a user terminal such as a user terminal identification number, QoS information, and a request band.

The user terminal characteristic classification controller 800 receives the call information notice, transmits a request for classifying data according to the QoS band characteristics, to the QoS band characteristic classifying unit 830, and prepares data classified according to the QoS band characteristics in the QoS unit requested by the user terminal.

### Fourth Embodiment

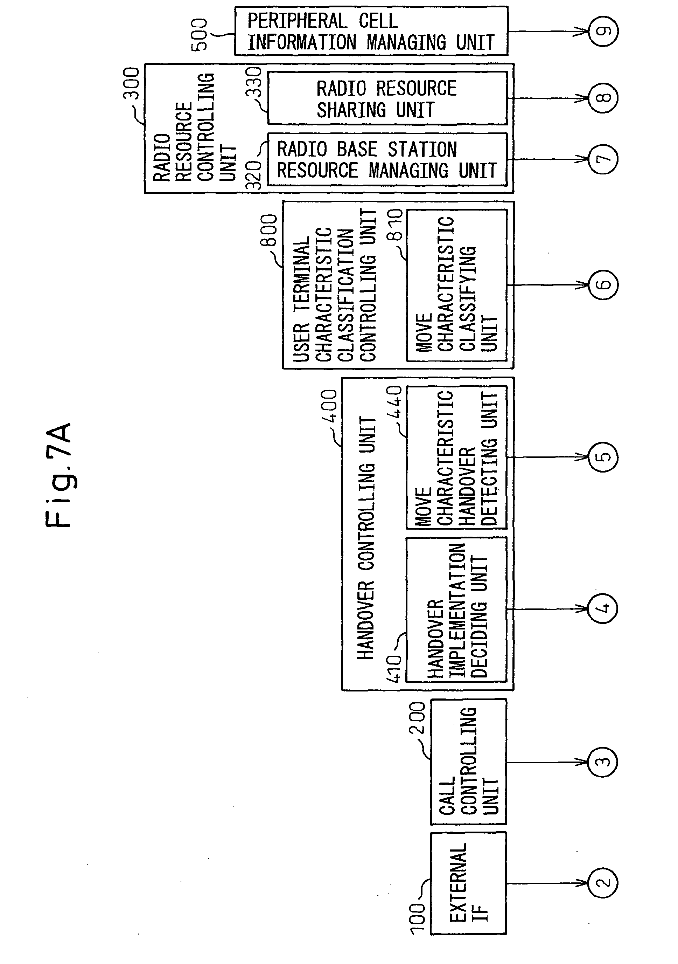

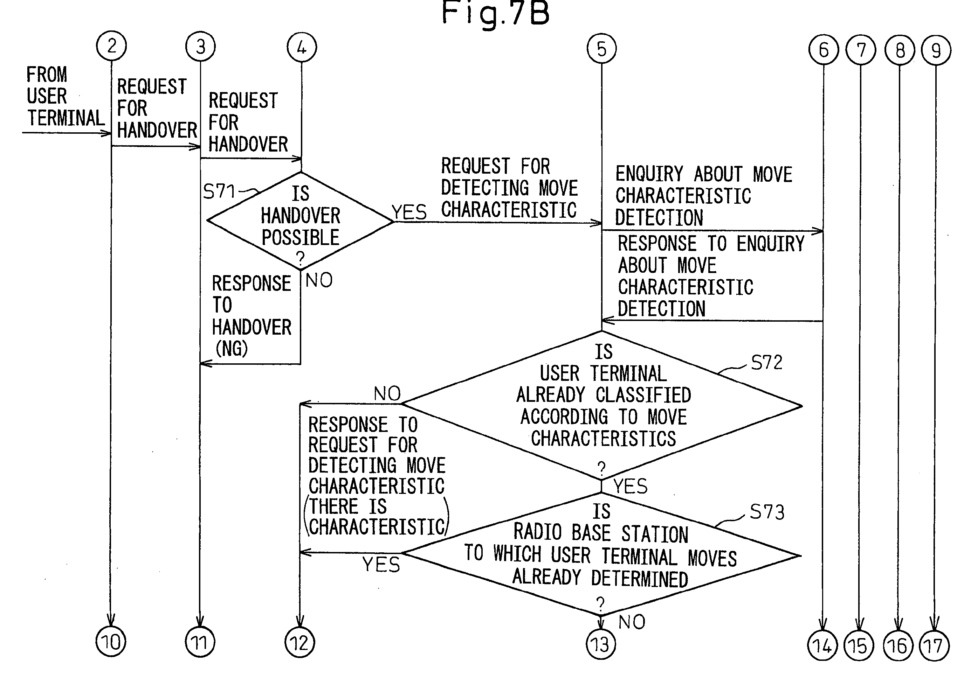

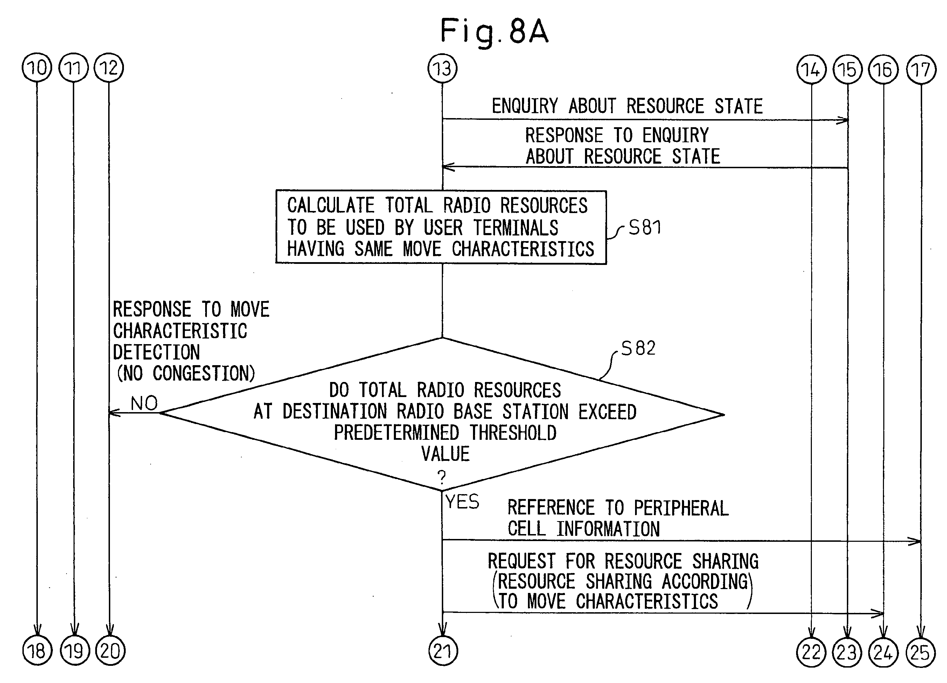

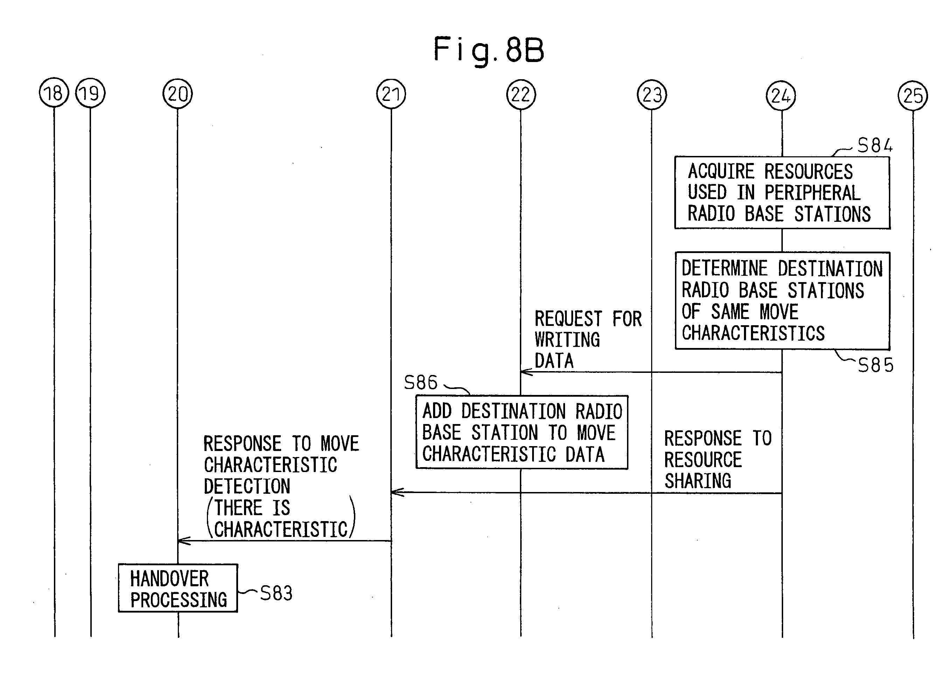

Figs. 7A, 7B, 8A and 8B show a sequence diagram of a radio resource sharing operation, within the RNC shown in Fig. 2, triggered by a mass handover of user terminals, according to a fourth embodiment of the present invention.

The present embodiment is based on the assumption that classification of user terminals according to the move characteristics explained with reference to Fig. 3 and Fig. 4 is already implemented. The outline operation is as follows. After user terminals are classified, when one of optional user terminals that are classified according to the move characteristics is handed over, occurrence of a mass handover of all the user terminals within the group to which the user terminal belongs is forecast. Further, occurrence of congestion in a destination radio station due to the execution of the mass handover is forecast. In this case, user terminals within the group classified according to the move characteristics are handed over to other radio base stations having allowances in radio resources. With this arrangement, congestion in the destination radio base station due to the mass handover of user terminals can be avoided. This is explained in further detail with reference to Figs. 7A, 7B, 8A and 8B.

When a user terminal requests a handover, the call controller 200 receives the handover request through the external IF 100, and transmits the handover request to the handover controller 400.

The handover controller 400 transmits the handover request to the handover implementing unit 410.

The handover implementing unit 410 decides, at step S71, whether the handover is possible based on communication quality (such as radio field intensity) of a peripheral cell notified from the user terminal. When it is decided that the handover is possible, the handover implementing unit 410 transmits a request for detecting move characteristics of the user terminal, to the move characteristic handover detecting unit 440.

When the move characteristic detection request is received from the handover implementing unit 410, the move characteristic handover detecting unit 440 transmits to the user terminal characteristic classification controller 800 an enquiry to ask whether the user terminal that makes the handover request is already classified according to the move characteristics.

The user terminal characteristic classification controller 800 transmits the received move characteristic detection enquiry to the move characteristic classifying unit 810, checks whether the user terminal is already classified according to the move characteristics, and returns the checked result to the-move characteristic handover detecting unit 440. A response message contains information about presence or absence of data classified according to the move characteristics, and presence or absence of a destination radio base station. When a destination radio base station is determined, a destination radio base station ID (identification) is added.

The move characteristic handover detecting unit 440 decides, at step S72, whether the user terminal is already classified according to the move characteristics based on the response message returned from the move characteristic handover detecting unit 440. When the user terminal is not classified according to the move characteristics as a result of the decision made, the move characteristic handover detecting unit 440 returns a move characteristic detection response (i.e., there is no characteristic) to the handover implementing unit 410. The handover implementing unit 410 implements the normal handover procedure, at step S81 shown in Fig. 8A.

When the user terminal is already classified according to the move characteristics, the move characteristic handover detecting unit 440 decides, at step S73, whether a radio base station, to which the user terminal to move, is already determined. When a radio base station to which the user terminal moves is already determined as a result of the decision made, the move characteristic handover detecting unit 440 transmits a move characteristic detection result (i.e., there are characteristics) specifying the determined radio base station as the move destination, to the handover implementing unit 410.

Even when a destination radio base station is not determined yet, the same move characteristics are already determined. Therefore, it is possible to forecast that user terminals of the same move characteristics will make a mass handover request immediately after that. Consequently, the move characteristic handover detecting unit 440 transmits a resource state enquiry to the radio base station resource managing unit 810. The radio base station resource managing unit 810 returns the resource state enquiry response to the request, to the move characteristic handover detecting unit 440.

At step S81 shown in Fig. 8A, the move characteristic handover detecting unit 440 calculates total radio resources to be used by the user terminals having the same move characteristics. At step S82, the move characteristic handover detecting unit 440 decides whether total radio resources at the destination radio base station are at least a predetermined threshold value.

When the total radio resources to be used by the user terminals having the same move characteristics do not exceed the threshold value as a result of the decision made at step S82, it is possible to decide that the radio resources in the destination radio base station are not congested due to the mass handover. In this case, the move characteristic handover detecting unit 440 returns a move characteristic detection response (i.e., there is no congestion) to the handover implementing unit 410. The handover implementing unit 410 carries out the normal handover processing, at step S83.

When the total radio resources to be used by the user terminals having the same move characteristics are equal to or above the threshold value as a result of the decision made at step S82, the move characteristic handover detecting unit 440 decides that the radio resources are congested when the mass handover is carried out, transmits a peripheral cell information reference request to the peripheral cell information manager 500, and obtains peripheral cell information from the information manager 500. The move characteristic handover detecting unit 440 also transmits a resource sharing request to the radio resource sharing unit 330, by using user terminal identification numbers, a destination radio base station, a peripheral radio base station, and classification according to move characteristics, as additional information.

At the resource sharing request from the move characteristic handover detecting unit 440, the radio resource sharing unit 330 obtains, at step S84, radio resources used in the radio base stations around the destination radio base station. At step S85, the radio resource sharing unit 330 determines destination radio base stations such that the radio resources used in the peripheral radio base stations due to the mass handover become uniform, for all user terminals having the same move characteristics as those of the user terminal.

After determining the destination radio base stations, the radio resource sharing unit 330 transmits a data writing request to the move characteristic classifying unit 810. At this request, the move characteristic classifying unit 810 writes the destination radio base station in move characteristic data, at step S86. The radio resource sharing unit 330 returns a resource sharing response to the move characteristic handover detecting unit 440.

When receiving the resource sharing response, the move characteristic handover detecting unit 440 transmits the move characteristic detection response (i.e., there are characteristics) assigning the determined destination radio base station, to the handover implementing unit 410. At step S83, the handover implementing unit 410 implements the handover processing based on the information about the assigned destination radio base station.

Thereafter, when user terminals having the same move characteristics make handover requests together, the handover implementing unit 410 implements the handover according to the determined destination radio base station.

By classifying data according to the move characteristics detected in advance based on the above method explained with reference to Figs. 7A, 7B, 8A and 8B, it becomes possible to avoid beforehand congestion in the destination radio base station due to a mass handover. When radio resources are uniformly dispersed to the peripheral radio base stations, the radio resources in the radio access network (RAN) can be effectively utilized as a result.

### Fifth Embodiment

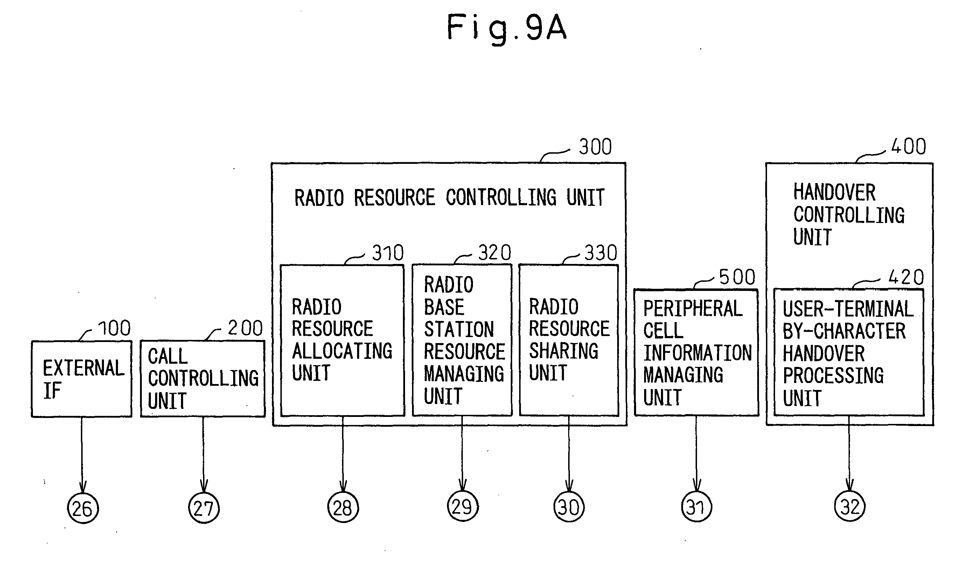

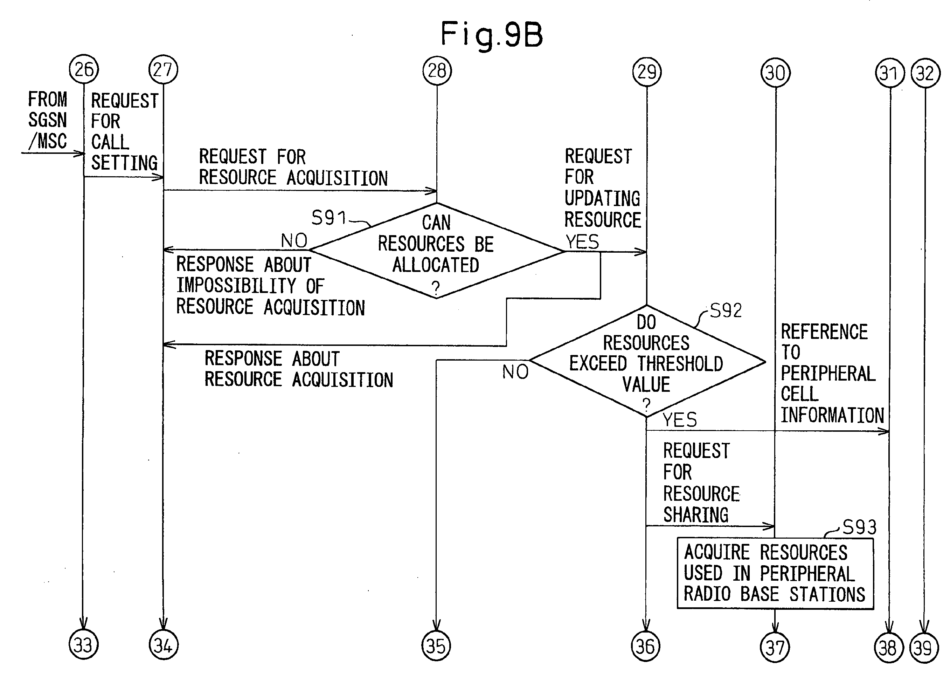

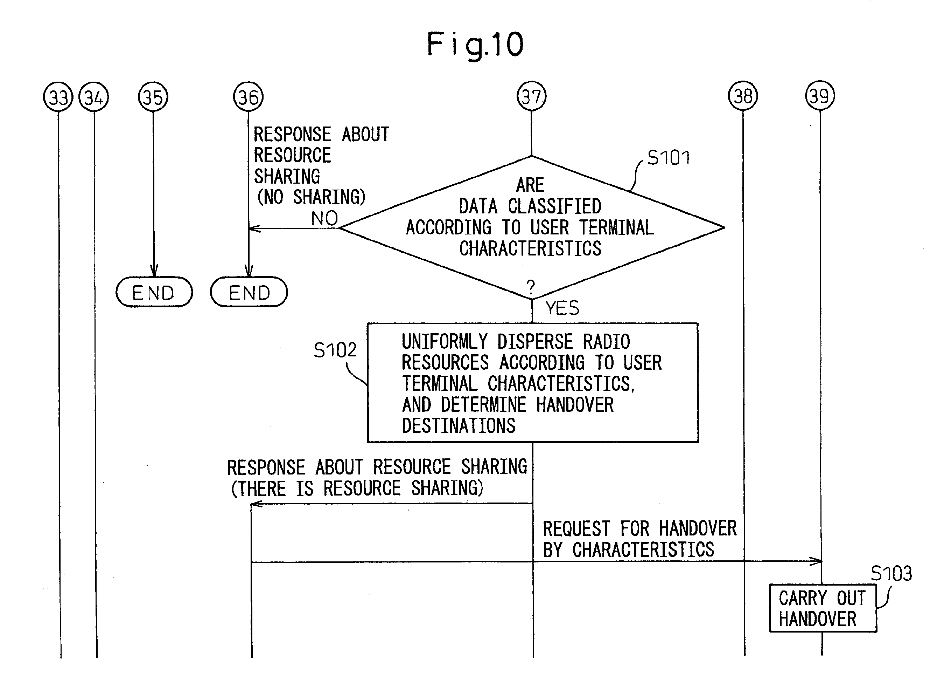

Figs. 9A and 9B and Fig. 10 show a sequence diagram of a radio resource sharing operation due to congestion in a radio base station triggered by a call setting, according to a fifth embodiment of the present invention.

The outline operation according to the present embodiment is as follows. Characteristics of user terminals that are fixedly present in a radio base station are extracted and classified as user terminal characteristics. When it is forecast that the radio base station is congested due to a call setting, the user terminals classified according to the user terminal characteristics are handed over to other radio base stations determined in advance, thereby avoiding congestion in the radio base station due to a call setting. This is explained in further detail with reference to Figs. 9A, 9B and 10.

The external IC 100 receives a call setting request from the SGSN or the MSC at the core network CN side, and transmits the call setting request to the call controller 200. The call controller 200 extracts user terminal information such as a user terminal identification number, radio base station information, QoS information, and a requested band. The call controller 200 transmits a resource acquisition request to the radio resource controller 300, using the present information as additional information.

The radio resource controller 300 transmits the resource acquisition request to the radio resource allocating unit 310, in order to secure radio resources requested by a user terminal. The radio resource allocating unit 310 compares idle resources in each radio base station with the resources requested by the user terminal, and decides whether the acquisition of the resources is possible. When it is decided that the acquisition of the resources is possible, the radio resource allocating unit 310 transmits a resource updating request to the radio base station resource managing unit 320, and transmits a resource acquisition response to the call controller 200. When it is decided that the acquisition of the resources is not possible, the radio resource allocating unit 310 transmits a resource acquisition impossible response to the call controller 200.

The radio base station resource managing unit 320 receives the resource updating request from the radio resource allocating unit 310, and updates the radio resources in each radio base station. At step S92, the radio base station resource managing unit 320 decides whether the used radio resources are at least at a predetermined threshold value. When a decision made is yes, it is forecast that the resources of the radio base station are congested. When it is forecast that the resources of the radio base station are congested, the radio base station resource managing unit 320 starts sharing the radio resources with other radio base stations to avoid congestion in the radio base station.

As a radio resource sharing procedure, the radio base station resource managing unit 320 first refers to the peripheral information database 510 connected to the peripheral cell information manager 500 (refer to Fig. 2), and checks the states of the radio base stations forming the cells at the periphery of the congested radio base station. At the same time, the radio base station resource managing unit 320 transmits a resource sharing request to the radio resource sharing unit 330, using a user terminal identification number, information of the congested radio base station, information of its peripheral radio base stations, and characteristics of the user terminal, as additional information. The assigned user terminal characteristics are the extracted user terminal characteristics such as move characteristics, radio field intensity characteristics, QoS band characteristics, etc., which are conditions for classifying resource sharing. In assigning the user terminal characteristics, these characteristics are assigned in station conditions beforehand. These characteristics can be changed according to implementation states. The peripheral cell information manager 500 delivers to the radio base station resource managing unit 330, a response to the peripheral cell information reference request transmitted from the move characteristic handover detecting unit 440 to the peripheral cell information manager 500.

The radio resource sharing unit 330 receives the resource sharing request from the radio base station resource managing unit 320, and obtains, at step S93, radio resources used in the radio base stations at the periphery of the congested radio base station. At step S101 shown in Fig. 10, the radio resource sharing unit 330 decides whether data are classified according to the user terminal characteristics.

When it is decided at step S101 that the characteristics specified in the resource sharing request from the radio base station resource managing unit 320 to the radio resource sharing unit 330 are already prepared, the radio resource sharing unit, at step S102, selects radio base stations to which individual user terminals move so that the radio resources used in the peripheral radio base stations become uniform, based on the radio resources used by all the user terminals that are classified according to the same characteristics. The radio resource sharing unit 330 adds the destination radio base station to the move characteristic data. When a decision made at step S101 is no, the radio resource sharing unit 330 returns a resource sharing response (i.e., there is no sharing) to the radio base station resource managing unit 320. After step S102, the radio resource sharing unit 330 returns a resource sharing response (i.e., there is sharing) to the radio base station resource managing unit 320.

After the radio resource sharing unit 330 returns the resource sharing response to the radio base station resource managing unit 320 after step S102, the radio base station resource managing unit 320 transmits a characteristic handover request to the user-terminal by-character handover processing unit 420, by using the specified characteristics and the radio base station information as additional information. The user-terminal by-character handover processing unit 420 receives this request, and carries out the handover processing at step S103.

The user-terminal by-character handover processing unit 420 transmits to the handover implementation deciding unit 410 (refer to Fig. 2), a handover request for handing over all the user terminals that are classified according to the same characteristics.

When congestion of resources in the radio base station before handover can be avoided after completing the handover of the user terminals according to the characteristic handover request, the user terminal characteristic classification controller 800 (refer to Fig. 2) cancels the user terminal characteristics related to the user terminals. When a radio base station at a handover destination can be classified according to characteristics triggered by the completion of handover to the radio base station at the handover destination, data are classified according to new characteristics t (i.e., a sharing of radio resources due to congestion in the radio base station, triggered by the completion of handover described later).

When user terminals that are fixedly present in the area of a radio base station are classified according to characteristics detected in advance based on the above method explained with reference to Figs. 9A, 9B and 10, occurrence of congestion in the radio base station due to a call setting can be avoided. By uniformly dispersing radio resources to the peripheral radio base stations, the radio resources in the radio access network (RAN) can be effectively utilized as a result.

### Sixth Embodiment

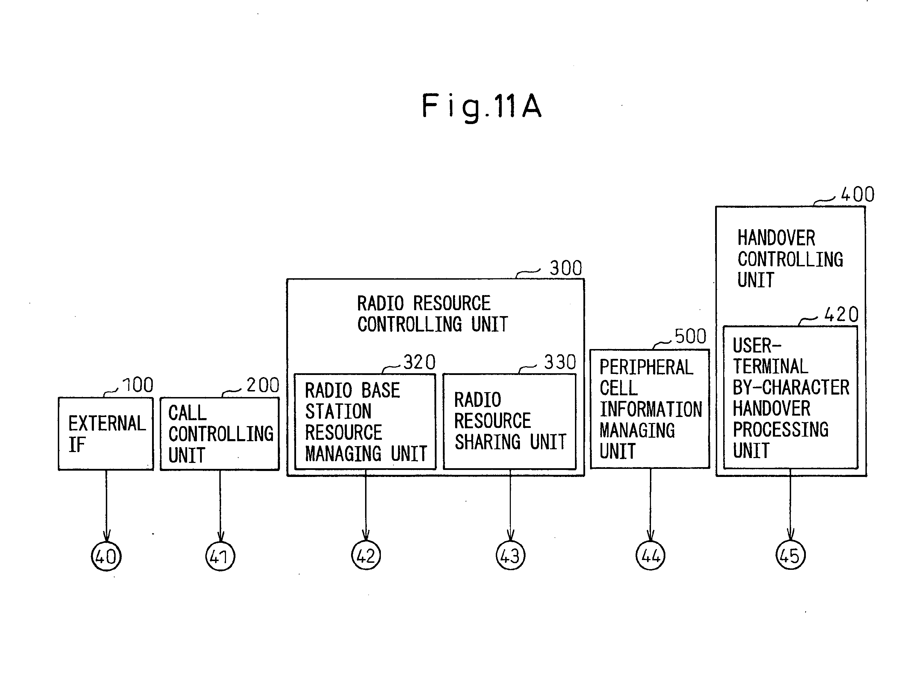

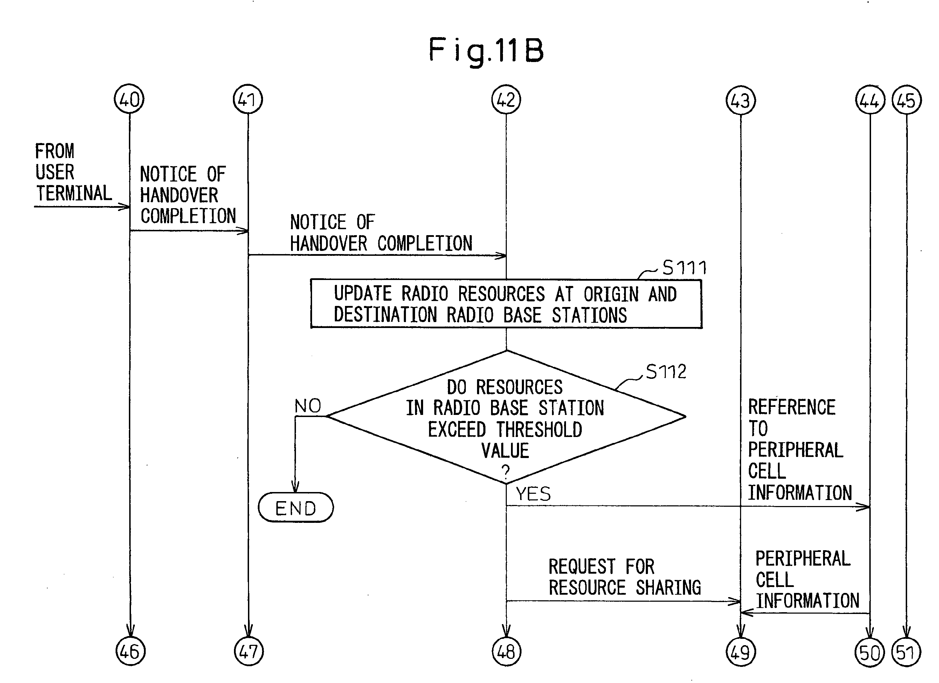

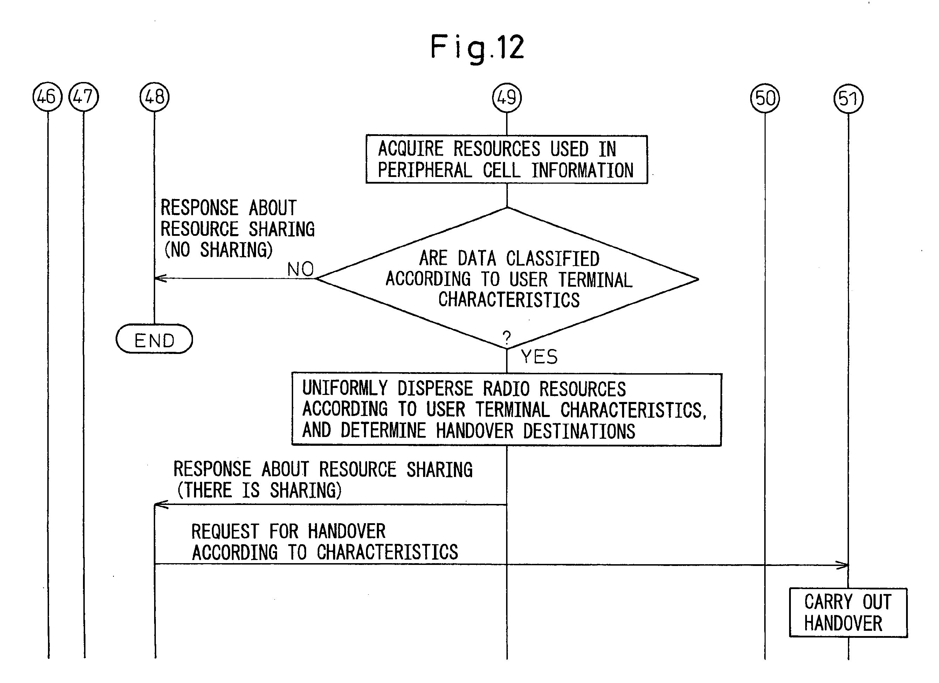

Figs. 11A, 11B and 12 is a sequence diagram of a radio resource sharing operation when a radio base station is congested triggered by a completion of handover, according to a sixth embodiment of the present invention.

The outline operation according to the present embodiment is as follows. Characteristics of user terminals that are fixedly present in a radio base station according to characteristics of user terminals are extracted and classified as user terminal characteristics. When it is forecast that a radio base station is congested upon completion of a handover, user terminals that are classified according to the user terminal characteristics are handed over to other radio base stations determined beforehand, thereby avoiding the congestion in the radio base station due to a call setting. This is explained in further detail with reference to Figs. 11A, 11B and 12.

In the radio network controller RCN, when the external IF 100 receives a message of completion of handover of an optional user terminal UE from an optional radio base station BS, the external IF 100 transmits the completion of handover, to the call controller 200. The call controller 200 transmits the handover completion notice to the radio resource controller 300, by using the user terminal UE and a destination radio base station BS as additional information.

The radio resource controller 300 transmits the completion of handover having the same contents, to the radio base station resource managing unit 320, in order to update radio resources used in each radio base station. At step S111, the radio base station resource managing unit 320 updates the radio resources used in the origin radio base station and updates the radio resources used in the destination radio base stations.

At step S112, the radio base station resource managing unit 320 decides whether the radio resources reach a predetermined threshold value. When a decision made at this step is yes, the radio base station resource managing unit 320 decides that the resources in the radio base station are congested. When the congestion is decided, the radio base station resource managing unit 320 starts sharing radio resources with other radio base stations in order to avoid the congestion in the radio base station.

The subsequent processing is the same as that for sharing radio resources triggered by a call setting as explained with reference to Figs. 9A, 9B and 10, and therefore, their explanation is omitted.

### Seventh Embodiment

A method of sharing radio resources using an idle area of a QoS guarantee band according to a seventh embodiment of the present invention is explained next. The outline of this method is as follows. In sharing radio resources using assigned characteristics, when QoS band-guaranteed user terminals are present among user terminals of the same characteristics, idle resources that are not actually used by these user terminals are shared by other user terminals, thereby determining destination radio base stations.

This is explained in further detail with reference to Fig. 2. When a radio base station is congested, the radio base station resource managing unit 320 receives a resource sharing request, and starts sharing radio resources, as described above. User terminal characteristics are received as additional information. When the sharing of a QoS band is assigned in advance, the radio base station resource managing unit 320 transmits a QoS-guaranteed user terminal enquiry to the user terminal characteristic classification controller 800, by using other specified characteristics of user terminals that share the QoS band, as additional information. The user terminal characteristic classification controller 800 receives the QoS-guaranteed user terminal enquiry, and transmits the QoS-guaranteed user terminal enquiry to the QoS band characteristic classifying unit 830, by using other specified characteristics of user terminals that share the QoS band as additional information. The assignment of sharing of the QoS band can be set in station conditions or during application.

The QoS band characteristic classifying unit 830 searches all user terminals classified according to the assigned user terminal characteristics for QoS band-guaranteed user terminals, and transmits a response to the QoS band-guaranteed user terminal enquiry, to the radio resource sharing unit 320, by using QoS band-guaranteed user terminal identification numbers as additional information. When QoS band-guaranteed user terminals are present, the radio resource sharing unit 320 calculates idle resources of the band-guaranteed user terminals, and selects radio base stations to which individual user terminals are to be handed over such that radio resources used in the peripheral radio base stations become uniform, based on radio resources used by all user terminals that are classified by the same characteristics, including band-not-guaranteed user terminals. The radio resource sharing unit 320 returns a resource sharing response to units that make the resource sharing request.

In sharing radio resources according to user terminal characteristics, idle resources of QoS band-guaranteed user terminals are shared with band-not-guaranteed user terminals having the same characteristics, based on the method according to the seventh embodiment. With this arrangement, radio resources can be dispersed uniformly more effectively.

Because resources that are not actually used by the QoS band-guaranteed user terminals can be effectively utilized, it becomes possible to avoid congestion in the radio base station due to the presence of a large volume of unused radio resources.

The above embodiments of the present invention are explained in further detail using the following examples.

### First Example

A first example corresponds to the first embodiment explained with reference to Fig. 3 and Fig. 4, and is the example of classifying user terminals according to move characteristics of the user terminals.

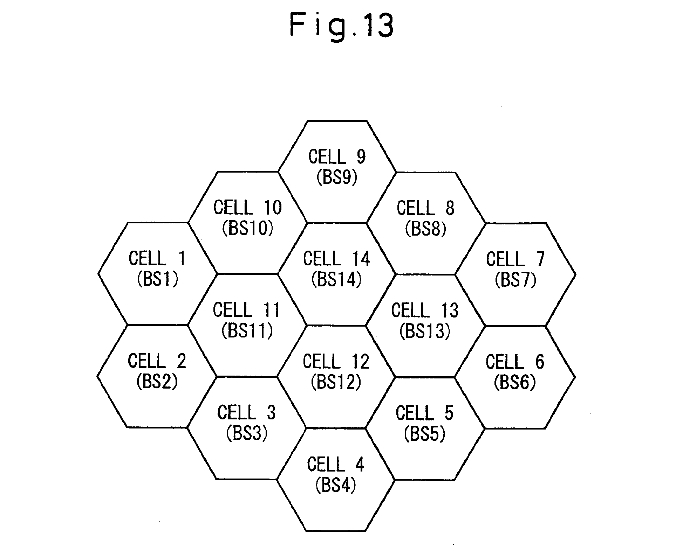

Fig. 13 is a configuration diagram of a cell 1 to a cell 14 to which waves reach from radio base stations BS1 to BS14 that are managed by the radio network controller RNC. As shown in Fig. 13, the cell 1 to the cell 14 are present adjacently.

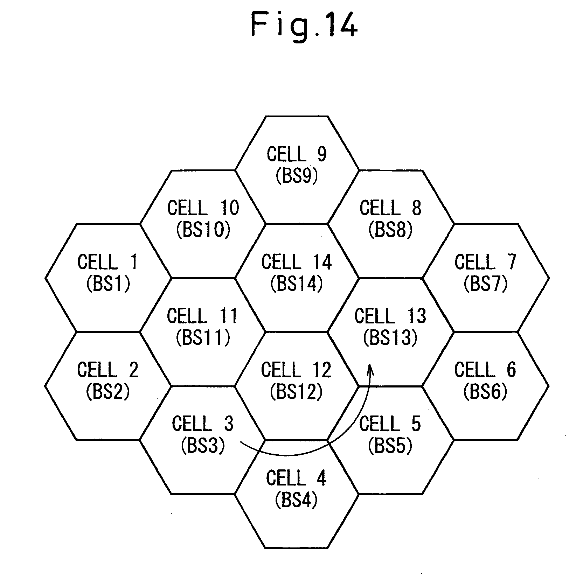

Fig. 14 is the configuration diagram of the cells 1 to 14 shown in Fig. 13, where user terminals UEs move from the cell 3 to the cell 14 via the cells 4 and 5 as shown by an arrow mark. In the present example, the move of user terminals UE1, UE2, UE3, and UE4 in a bus along the route as shown by the arrow mark is explained.

Users of the user terminals UE1, UE2, UE3, and UE4 ride the same bus together within the cell 3. These user terminals reach a border between the cell 3 and the cell 4 around 18:00 hours, reach a border between the cell 4 and the cell 5 around 18:04 hours, and reach a border between the cell 5 and the cell 13.

As conditions for classifying move characteristic, it is assumed that a minimum number of past handover times is three, and that a minimum number of user terminals that meet this condition is four.

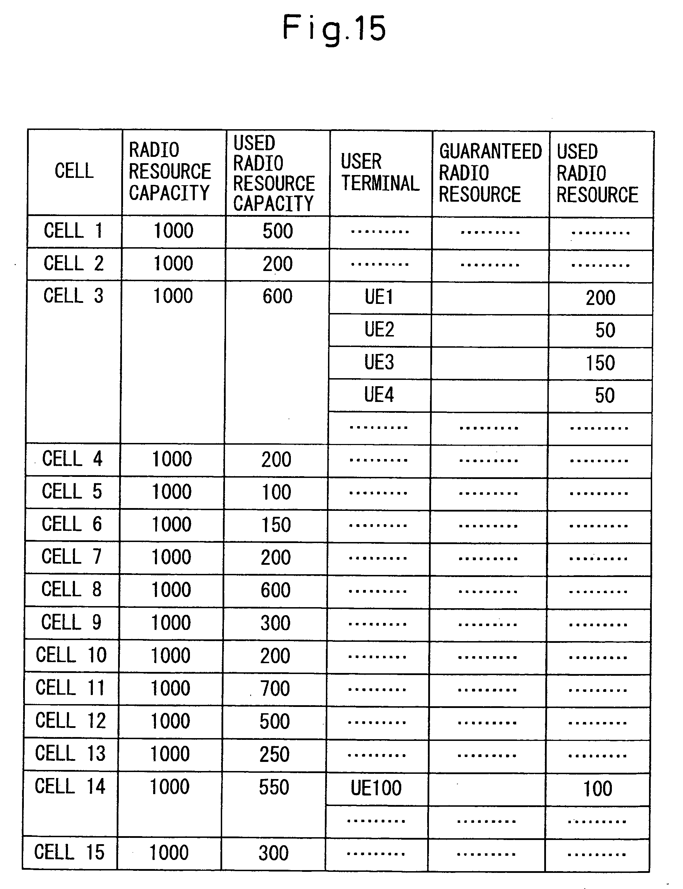

Fig. 15 is a radio resource management table showing an example of states of the user terminals UE1, UE2, UE3, and UE4 before they move to the cell 3 that corresponds to the radio base station BS3, managed by the radio base station resource managing unit 320. According to the example shown in Fig. 15, a radio resource capacity for each of the radio base stations BS1 to BS14 that are present in respective areas of all cells 1 to 14 is 1000. Radio resources used by the user terminal UE1 is 200, radio resources used by the user terminal UE2 is 50, radio resources used by the user terminal UE3 is 150, and radio resources used by the user terminal UE4 is 50, in the radio base station BS3 respectively. A total capacity of radio resources used is 600.

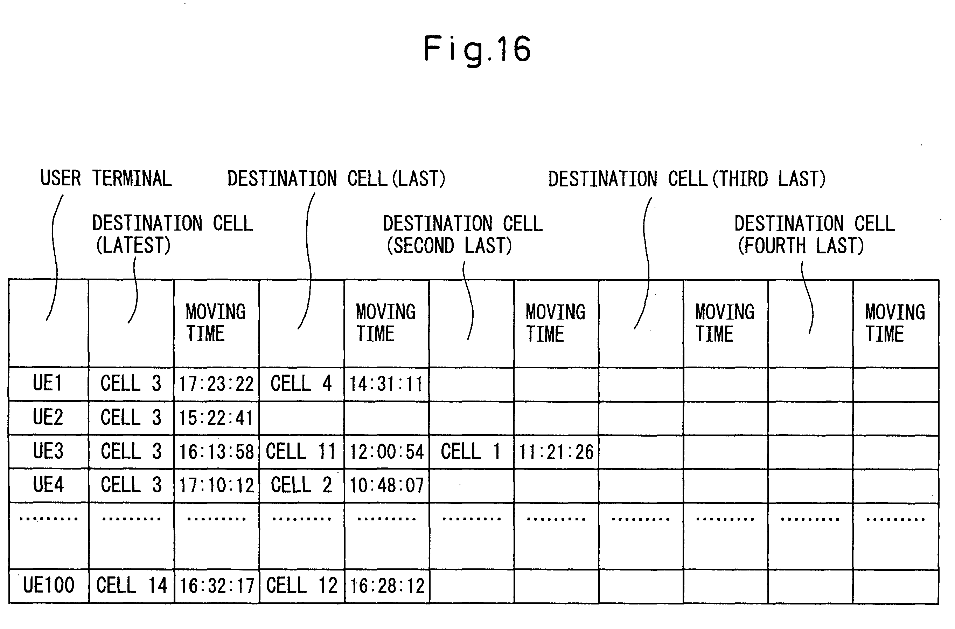

Fig. 16 is a handover record data table showing an example of states of the user terminals before they ride a bus, updated by the handover recording unit 430. According to the example shown, the user terminal UE1 shifted to the cell 4, as the last move destination, at 14:31:11 hours, and shifted to the latest cell 3 at 17:23:22. The move record of other user terminals can be also read from this table. The latest move destinations of the user terminals UE1 to UE4 are the same cell 3 before riding a bus.

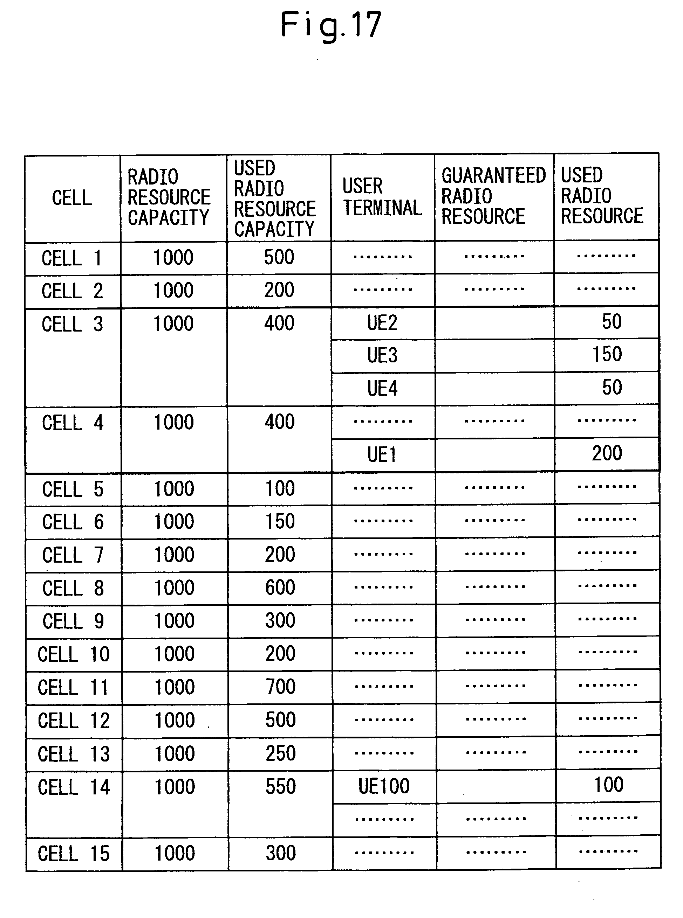

Fig. 17 is the radio resource management table updated after the user terminal UE1 is handed over from the cell 3 to the cell 4.

When the user terminal UE1 is first handed over from the cell 3 to the cell 4 among the user terminals UE1, UE2, UE3, and UE4 when the bus passes the border from the cell 3 to the cell 4, the call controller 200 receives a notice of completion of handover of the user terminal UE1 to the cell 4.

The call controller 200 transmits the handover completion notice to the radio resource controller 300 and to the handover controller 400. The radio resource controller 300 transmits the notice of handover of the user terminal UE1 to the cell 4, to the radio base station resource managing unit 320, in order to update the table of radio resource management for each radio base station. The radio base station resource managing unit 320 updates the radio resources in the cell 3 and the cell 4 in which radio resources changed due to the handover as shown by a thick-line frame in Fig. 17.

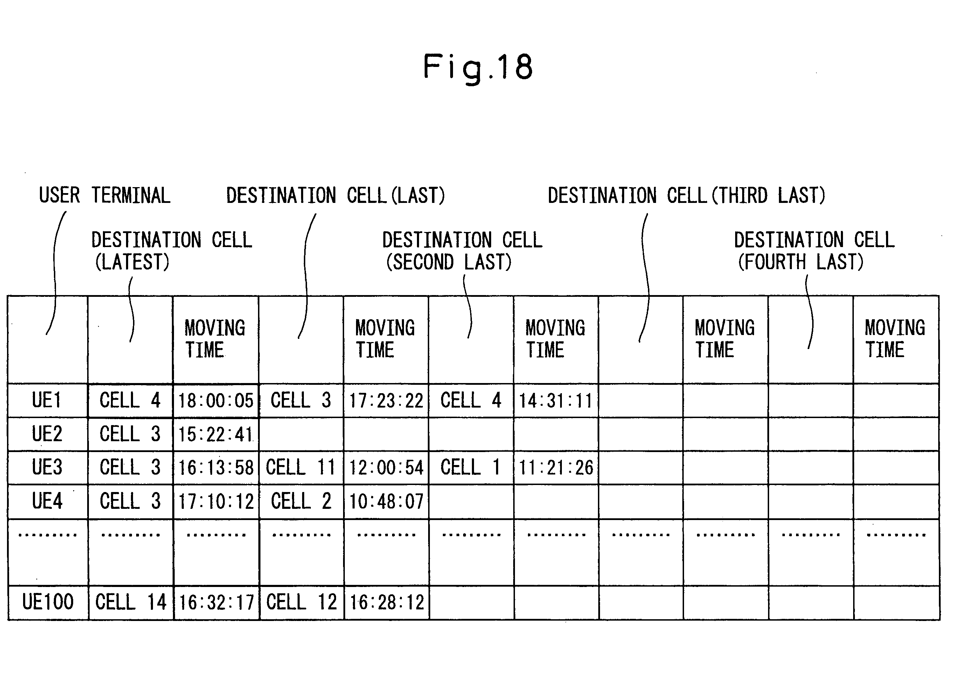

Fig. 18 is the table of move record data updated after the user terminal UE1 is handed over.

The handover controller 400 transmits the notice of completion of handover of the user terminal UE1, to the handover implementing unit 410, to request carrying out a handover completion post processing. The handover implementing unit 410 transmits a request for recording the move of the user terminal UE1 to the cell 4, to the handover recording unit 430, in order to update the move record of the user terminal UE1.

The handover recording unit 430 updates the record of the move of the user terminal UE1 from the cell 3 to the cell 4 at 18:00:05 hours in the handover record data, and transmits a notice of the handover record of the user terminal UE1, to the user terminal characteristic classification controller 800. The updated contents are recorded within a thick-line frame in Fig. 18. The handover recording unit 430 also sends a response indicating the handover record of the UE1, to the handover implementing unit 410.

The user terminal characteristic classification controller 800 receives the notice of the handover record of the user terminal UE1, and transmits a request for classifying data according to the move characteristics of the user terminal UE1, to the move characteristic classifying unit 810. The move characteristic classifying unit 810 receives the_request for classifying data according to the move characteristics of the user terminal UE1, and decides whether the user terminal UE1 satisfies the conditions for classifying move characteristic, by referring to the latest handover record of the user terminal UE1 in the handover record data shown in Fig. 18 that is prepared by the handover recording unit 430. In this example, the user terminal UE1 has a handover record of two times, and therefore, move characteristics cannot be classified.

The handover implementing unit 410 receives a response of the handover record of the user terminal UE1, and responds the notice of completion of handover of the user terminal UE1, to the call controller 200.

Thereafter, in the process of the bus carrying the user terminals UE1, UE2, UE3, and UE4 from the cell 4 to the cell 5, and from the cell 5 to the cell 13, the handover to the cell 13 is completed in the order of the UE1, UE2, and UE3, on passing the border from the cell 5 to the cell 13. An operation associated with the completion of handover of the user terminal UE4 to the cell 13 is explained below.

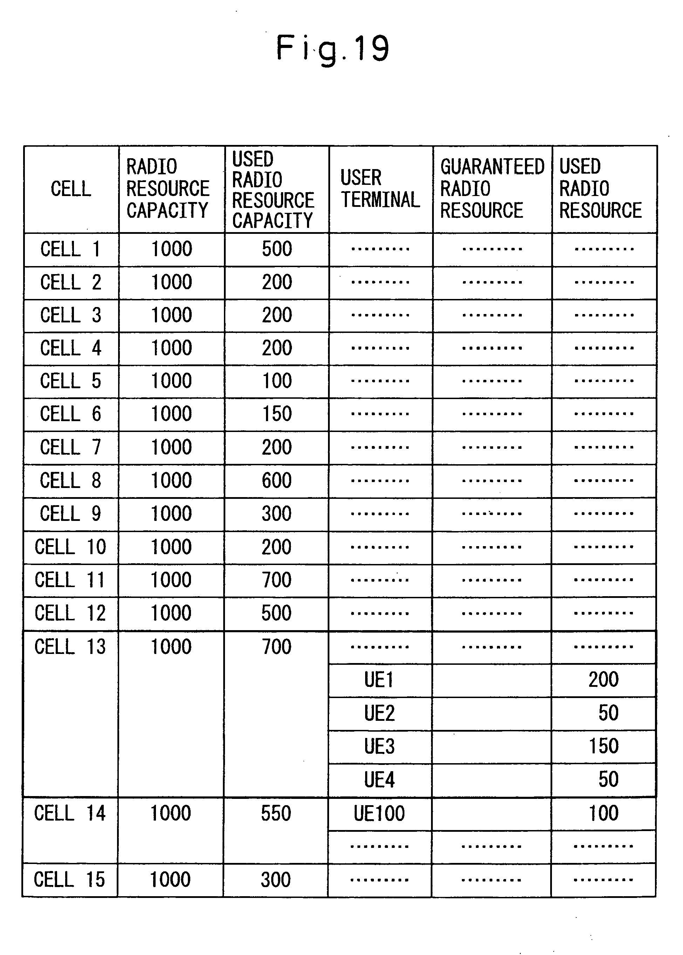

Fig. 19 is the radio resource management table updated after the user terminal UE4 is handed over. The radio base station resource managing unit 320 of the radio resource controller 300 processes the notice of completion of handover of the user terminal UE4 to the cell 13. As shown within a thick-line frame in Fig. 19, the table of radio resource management for each user terminal is updated, and the user terminals UE1 to UE4 are present within the cell 13. Total capacity of the radio resources used in the cell 13 is 700.

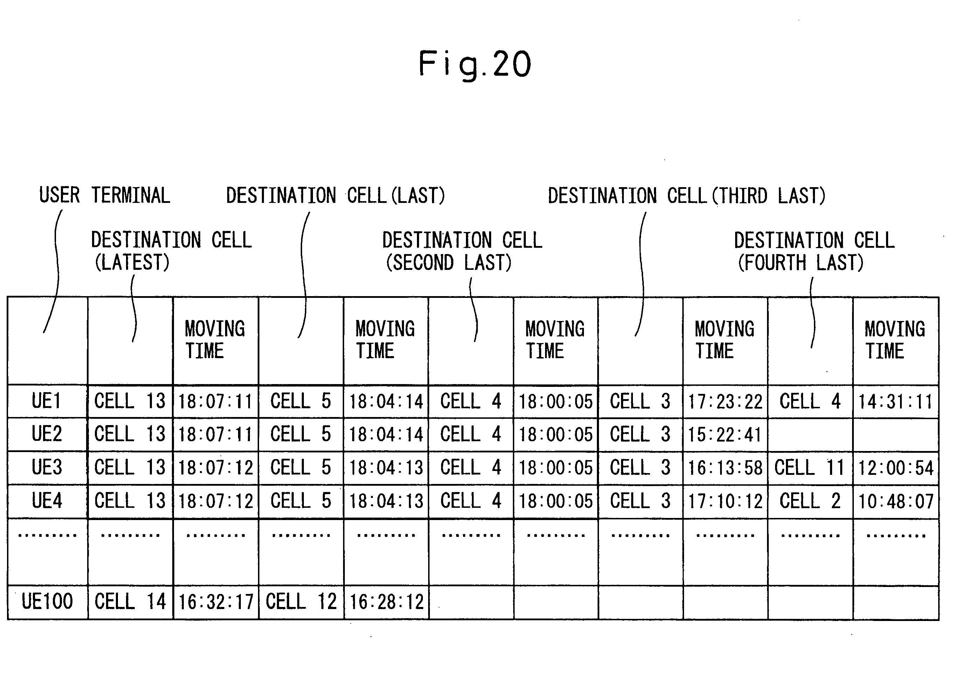

Fig. 20 is the table of move record data updated after the user terminal UE4 is handed over. The handover recording unit 430 of the handover controller 400 processes the notice of completion of handover of the user terminal UE4 to the cell 13, like in Fig. 18, thereby updating the handover record data. As a result, as shown within a thick-line frame in Fig. 20, the user terminal UE1 moved to the latest cell 13 at 18:07:11 hours, moved to the cell 5 last at 18:04:14, and moved to the cell 4 at the second last at 18:00:05. Move records of the rest of user terminals UE2, UE3, and UE4 are also clear from Fig. 20.

The move characteristic classifying unit 810 receives the request for classifying data according to move characteristics of the user terminal UE4, finds the handover record of the latest three times of the user terminal UE4 from the handover record data prepared by the handover recording unit 430, detects the same move characteristics as those of the user terminals UE1, UE2, and UE3, and decides that the handover can be classified as move characteristics because the total number of user terminals including UE4 is four. As a result, data classified according to move characteristics is prepared. The above operation is carried out in the same flow as that explained for the user terminal UE1.

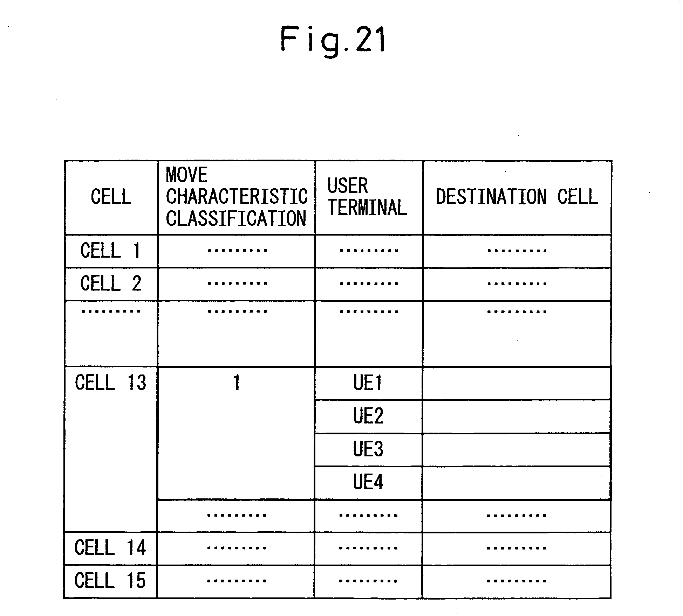

Fig. 21 is a table of data classified according to move characteristics that is prepared as described above. A shown within a thick-line frame in Fig. 21, the user terminals UE1 to UE4 are present in the cell 13, and "1" is allocated to the user terminals as data classified according to user terminal characteristics.

In the above operation, data classified according to the move characteristics can be prepared.

### Second Example

A second example corresponds to the third embodiment explained with reference to Fig. 5, and is the example of classifying user terminals according to radio field intensity.

It is assumed that the user terminals UE5 to UE12 belong to the cell 11 at present. As conditions for classifying radio field intensity characteristics, it is assumed that the radio field intensity reported from a user terminal is equal at least at three times, and that total number of user terminals having the same condition is at least six.

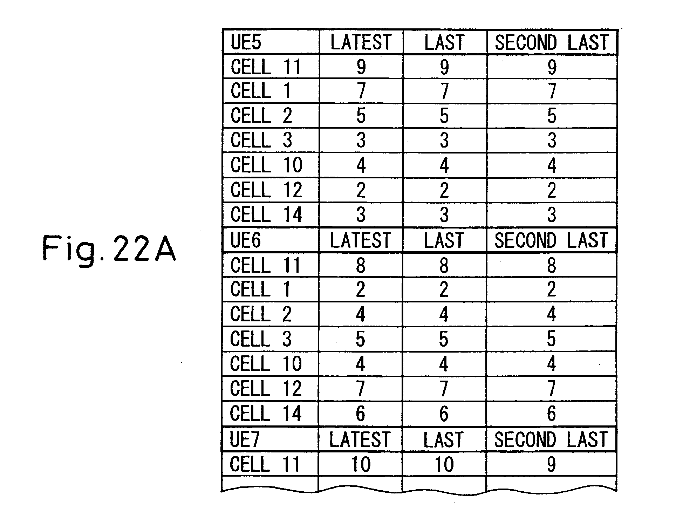

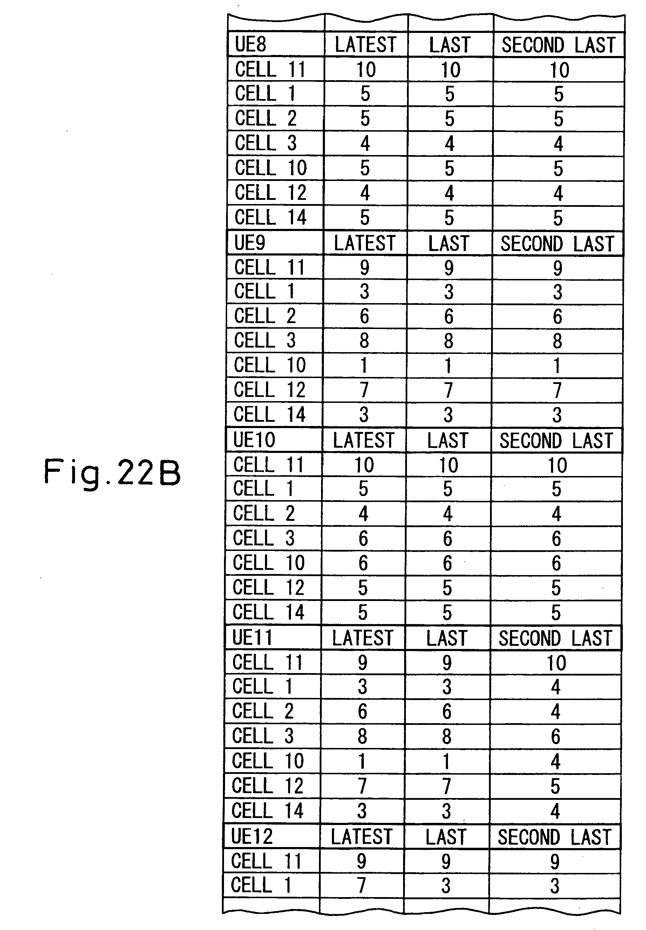

Fig. 22A and 22B show the radio quality management database 710 prepared based on radio field intensity reports from user terminals. In Figs. 22A and 22B, the record database shows the latest radio field intensity, the last radio field intensity, and the second last radio field intensity from the radio base station within the cell 11 in which the user terminals UE5 to UE12 are currently present and from radio base stations in the peripheral adjacent cells 1, 2, 3, 10, 12, and 14.

In the example shown in Figs. 22A and 22B, the latest radio field intensity, the last radio field intensity, and the second last radio field intensity in each of the user terminals UE5, UE6, UE8, UE9, and UE10 currently connected to the radio base station BS11 within the cell 11 are the same. This indicates that each user terminal did not move and is fixedly present in the cell 11.

On the other hand, the last radio field intensity and the second last radio field intensity in the user terminal UE11 in the cell 11 are different. This indicates that the user terminal UE11 was not fixedly present in the cell 11.

When a further updated radio field intensity report from the user terminal UE11 shows radio field intensity 9 in the cell 11, radio field intensity 3 in the cell 1, radio field intensity 6 in the cell 2, radio field intensity 8 in the cell 3, radio field intensity 1 in the cell 10, radio field intensity 7 in the cell 12, and radio field intensity 3 in the cell 14, the contents become the same as those in the past two radio field intensity reports from the user terminal UE11. Therefore, the UE11 is also decided to be fixed to the cell 11.

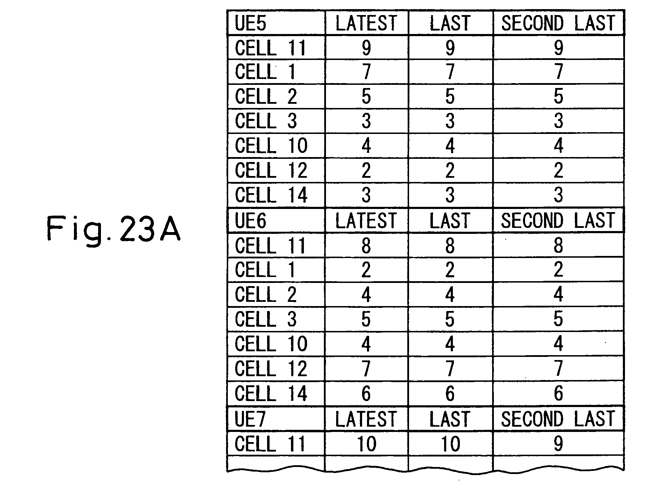

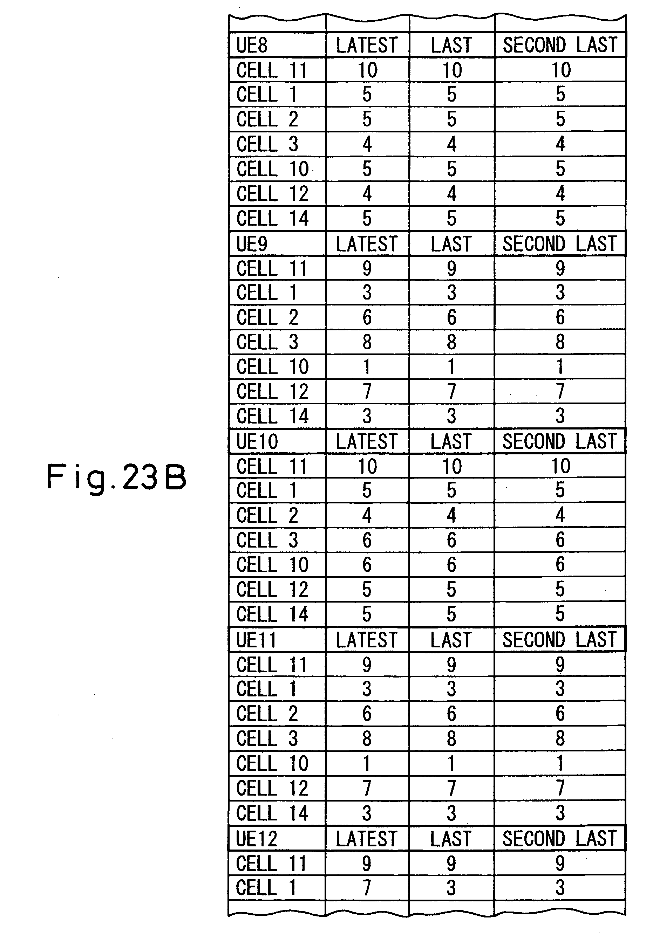

Figs. 23A and 23B show the table of radio quality management database 710 updated after the report of radio field intensity from the user terminal UE11. Figs. 23A and 23B are different from Figs. 22A and 22B in that in Figs. 23A and 23B, radio field intensity to the user terminal UE11 from each of the cells 11, 1, 2, 3, 10, 12, and 14 is the same at the past three times, respectively. The radio quality manager 700 records this radio field intensity report into the radio quality management database 710, and transmits the radio field intensity report of the user terminal UE11 to the user terminal characteristic classification controller 800. The user terminal characteristic classification controller 800 receives the report of radio field intensity in the user terminal UE11, and transmits a request for classifying data according to the report of radio field intensity in the user terminal UE11, to the radio field intensity characteristic classifying unit 820.

The radio field intensity characteristic classifying unit 820 refers to the radio quality record database 710, and prepares data classified according to radio field intensity based on the fact that the radio field intensity in the user terminal UE11 is equal at the past three times and that total number of user terminals of which radio field intensity is stable is six, including the user terminal UE 11, as the same characteristics. The radio field intensity characteristic classifying unit 820 informs the radio quality manager 700 that user terminals have characteristics according to received radio field intensity.

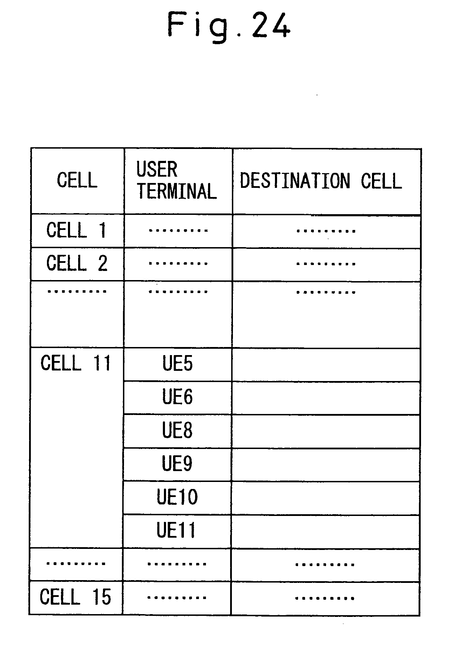

Fig. 24 is a table of data classified according to radio field intensity characteristic after the radio field intensity in the user terminal UE11 is reported. In the example shown, the user terminals UE5, 6, 8, 9, 10, and 11 are fixedly present in the cell 11.

Data classified according to radio field intensity characteristics can be prepared based on the above operation.

### Third Example

A third example corresponds to the fourth embodiment explained with reference to Fig. 5, and is the example of classifying user terminals according to a quality of service (QoS) band.

In the third example, it is assumed that the four user terminals UE5, UE6, UE7, and UE8 belong to the cell 13. The operation when the user terminal UE9 of a band-guarantee type (i.e., requested guaranteed radio resources = 300) receives a call setting request from the radio base station BS13 within the cell 13 is explained.

The call controller 200 extracts necessary information from the call setting request that is received from the external IF 100, and transmits a resource acquisition request to the radio resource controller 300. The necessary information contains UE9 as a user terminal identification number, the cell 11 as a radio base station at the connection destination, band guarantee as a QoS class, and 300 as requested guaranteed radio resources.

The call controller 200 receives a response to the effect that the resources can be acquired, from the radio resource controller 300, and transmits a call information notice to the user terminal characteristic classification controller 800, using the user terminal UE9' and the QoS information as additional information. The user terminal characteristic classification controller 800 receives the notice of call information of UE9, and transmits a request for classification to the QoS band characteristic classifying unit 830, according to the QoS characteristics of the same additional information.

When the user terminals UE5 and UE8 that are in communications in the cell 13 are also carrying out band guarantee type communications like the user terminal UE9, data are already classified according to the QoS characteristics. The QoS band characteristic classifying unit 830 adds the user terminal UE9 to this classification. It is possible to classify data according to the QoS characteristics.

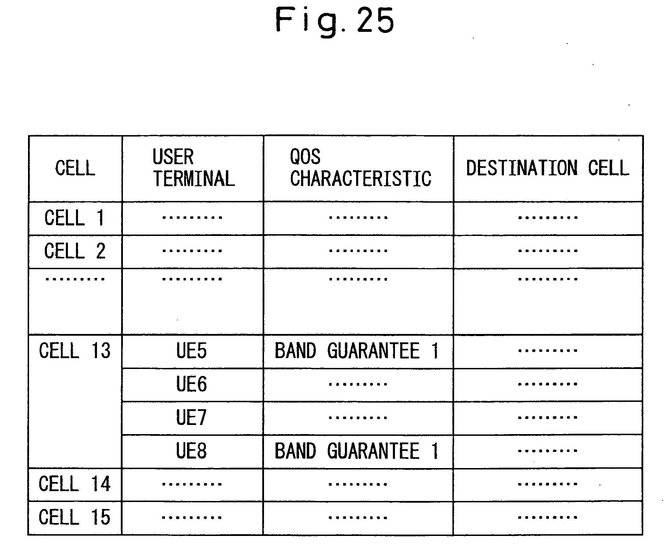

Fig. 25 is a table of a database classified according to QoS information before the user terminal UE9 is added to the data classified according to the QoS characteristics.

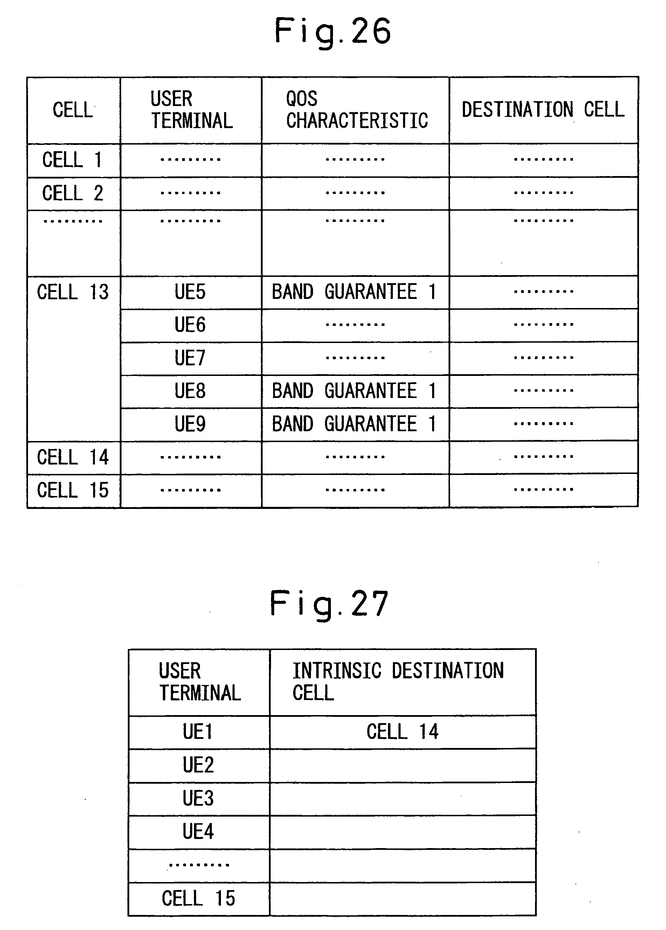

Fig. 26 is a table of a database classified according to QoS information after the user terminal UE9 is added to the data classified according to the QoS characteristics.

### Fourth Example

A fourth example corresponds to the fifth embodiment explained with reference to Fig. 7 and Fig. 8, and is the example of a radio resource sharing control triggered by a handover request.

It is assumed that data classified according to move characteristics are already prepared in the first example, and that a using rate of radio resources in a radio base station is at least 80 percent as a condition for detecting congestion in the radio base station.

It is assumed that the user terminals UE1, UE2, UE3, and UE4 of which move characteristics are related further continue to move, and pass a border from the cell 13 to the cell 14 at around 18:10 hours.

When the user terminal UE1 detects that communication quality in the cell 14 is better than that in the cell 13 at the time of passing the border from the cell 13 to the cell 14, the user terminal UE1 requests a handover to the cell 14.

The call controller 200 receives the handover request from the user terminal UE1, indicating handover destination candidates of the cell 14, the cell 8, and the cell 12 to which a handover is considered possible. The handover controller 400 transmits the handover request of the user terminal UE1, to the handover implementing unit 410. The handover implementing unit 410 decides that the handover is possible based on the communication quality in the cell-14, and transmits a request for detecting move characteristics of the user terminal UE1, to the move characteristic handover detecting unit 440.

The handover implementing unit 410 stores information about the destination radio base station in which the user terminal making the handover request can enjoy the best communication quality. This information is used as correction data to update the move destination, at the time of updating the handover record data after completing the handover (as described later). Fig. 27 is a table of handover record correction data after the user terminal UE1 is handed over to the cell 14.

The move characteristic handover detecting unit 440 transmits an enquiry about a detection of move characteristics of the user terminal UE1, to the user terminal characteristic classification controller 300 to check whether the user terminal UE1 is classified according to the move characteristics. The user terminal characteristic classification controller 300 transmits the enquiry about a detection of move characteristics of the user terminal UE1, to the move characteristic classifying unit 810.

The move characteristic classifying unit 810 checks whether the user terminal UE1 is classified into the move characteristic data by referring to the data (refer to Fig. 21) classified according to the move characteristics. When it is detected that the user terminal UE1 is already classified into classification 1 of the move characteristics in the cell 13, the move characteristic classifying unit 810 checks whether a radio base station to which the user terminal UE1 moves is already determined. In this case, a destination radio base station is not determined yet. The move characteristic classifying unit 810 transmits a response to the move characteristic enquiry, to the move characteristic handover detecting unit 440, to the effect that the user terminal UE1 is classified into the classification 1 and that a destination radio base station is not determined yet.

The move characteristic handover detecting unit 440 recognizes that the user terminal UE1 is classified into the classification 1 and that a destination radio base station is not determined yet. The move characteristic handover detecting unit 440 makes an enquiry about resource states of the user terminals UE2 and UE3 to the radio base station resource managing unit 320, in order to assume that the user terminals UE2, UE3, and UE4 classified into the same move characteristics make a handover request together immediately after that. In this case, it is made clear that total volume of radio resources used in the classification 1 of move characteristics is 450. Assuming that the total radio resources move to the cell 14, it is decided whether this volume exceeds a congestion threshold value determined in advance. In this case, as is clear from Fig. 19, a total volume of radio resources used in the cell 14 becomes 1000, which is the sum of 550 already used by UE100 and 450 as the total volume of radio resources used. Because the radio resource capacity in the cell 14 is 1000, the resource utilization rate becomes 100 percent, which exceeds the 80 percent as the congestion threshold value determined in advance. Consequently, congestion in the radio base station can be forecast.

Because the total volume of radio resources exceeds the congestion threshold value, the move characteristic handover detecting unit 440 refers to the peripheral cell information database 510, and recognizes that the user terminal UE1 can be handed over to radio base stations in the cell 12, the cell 13, and the cell 8 among the radio base stations in cells at the periphery of the cell 14. The move characteristic handover detecting unit 440 transmits a resource sharing request to the radio resource sharing unit 330, using the user terminal UE1, the cell 14 of the origin radio base station, the cell 12, the cell 13, and the cell 8 of the corresponding peripheral radio base stations, and the move characteristics, as additional information.

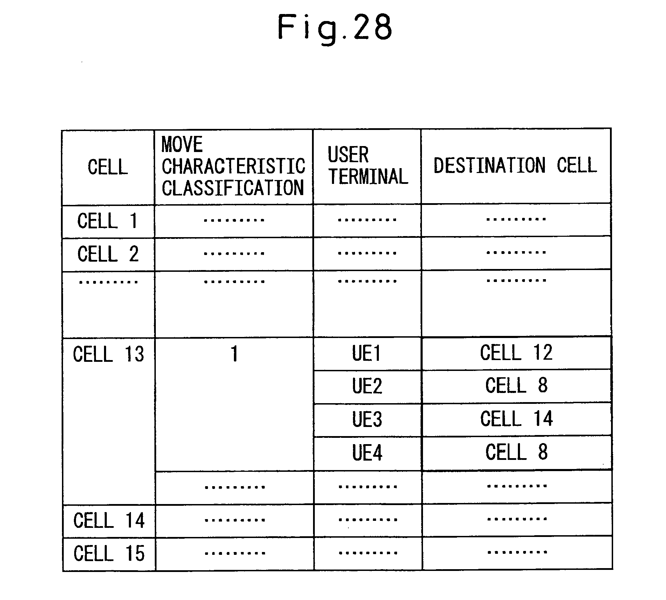

The radio resource sharing unit 330 receives the resource sharing request, and determines cells to which the user terminals classified into the classification 1 of move characteristics move, such that the radio resources in the cell 12, the cell 13, and the cell 8 of the radio base stations forming the peripheral cells are used uniformly while avoiding congestion in the cell 14. Specifically, the user terminals UE1, UE2, UE3, and UE4 are determined to move to the cell 12, the cell 8, the cell 14, and the cell 8, respectively. After determining the destination cells, the radio resource sharing unit 330 transmits a data writing request for writing move characteristic data, to the move characteristic classifying unit 810, and adds the destination cells. Fig. 28 is the table of classified data updated according to move characteristics after determination of the radio base stations to which the user terminals determined above are to move. In Fig. 28, the updated data are shown within a thick-line frame.

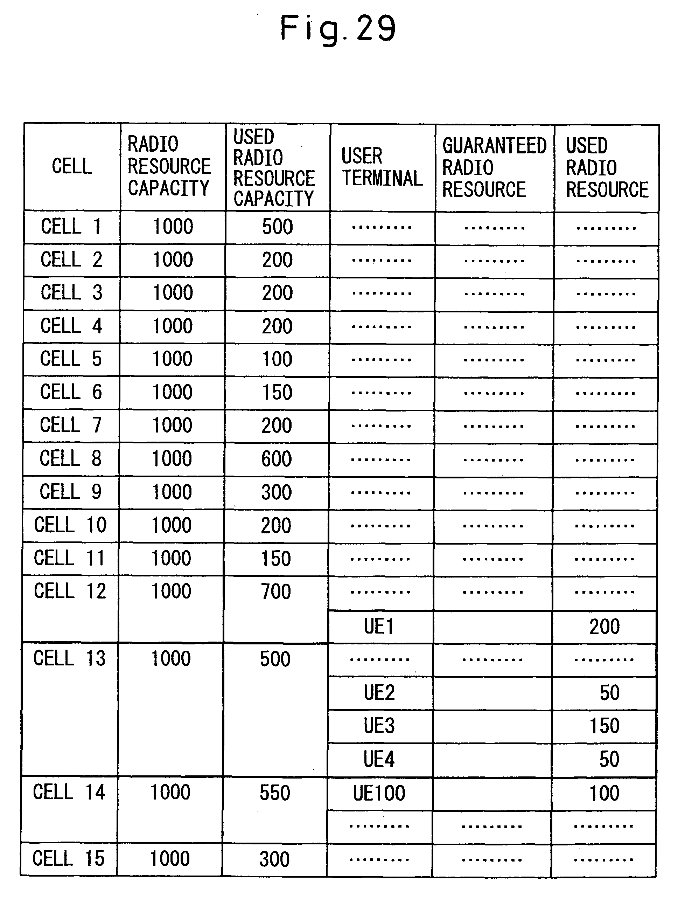

Thereafter, the radio resource sharing unit 330 makes a resource sharing response regarding the move characteristics of UE1, to the move characteristic handover detecting unit 440. The move characteristic handover detecting unit 440 makes a move characteristic detection response to the handover implementing unit 410, to the effect that the destination cell of the user terminal UE1 is the cell 12. The handover implementing unit 410 executes the handover processing to move the user terminal UE1 to the cell 12, following the result of the move characteristic detection response. Fig. 29 is the radio resource management table updated after completing the handover of the user terminal UE1 to the cell 12.

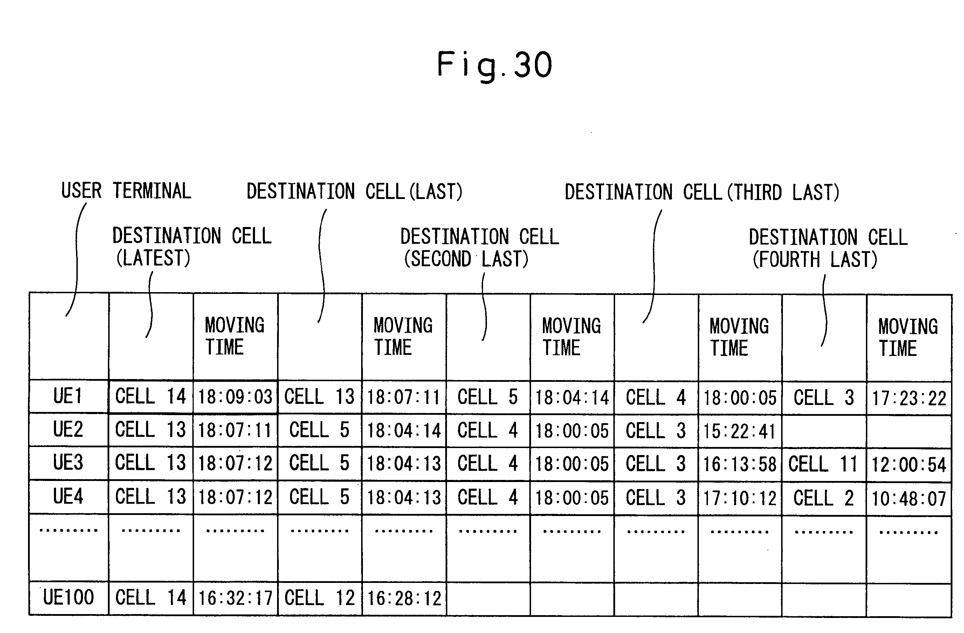

After completing the handover of the user terminal UE1, the handover record data is updated in the manner as explained in the first example. After the move of the user terminal UE1 to the cell 12, when the user terminals UE2 to UE4 move to the cell 14, the user terminals UE1 to UE4 have no group characteristics. The handover recording unit 430 refers to the handover record correction data managed by the handover implementing unit 410, and registers the "cell 14" that is intrinsically selected as the destination cell of UE1. In this case, the radio resource management table, the handover record data, and the data classified according to the move characteristics are updated for each cell, as shown in Fig. 29, Fig. 30, and Fig. 31, respectively.

Thereafter, handover requests of the user terminals UE2, UE3, and UE4 are carried out, using the cell 14 as a candidate of highest priority, and the cell 8 and the cell 12 as other candidates, as for UE1. Because the move characteristic classifying unit 810 already determines the move characteristics of UE2, UE3, and UE4, the handover processing is carried out based on the determined destination radio base stations.

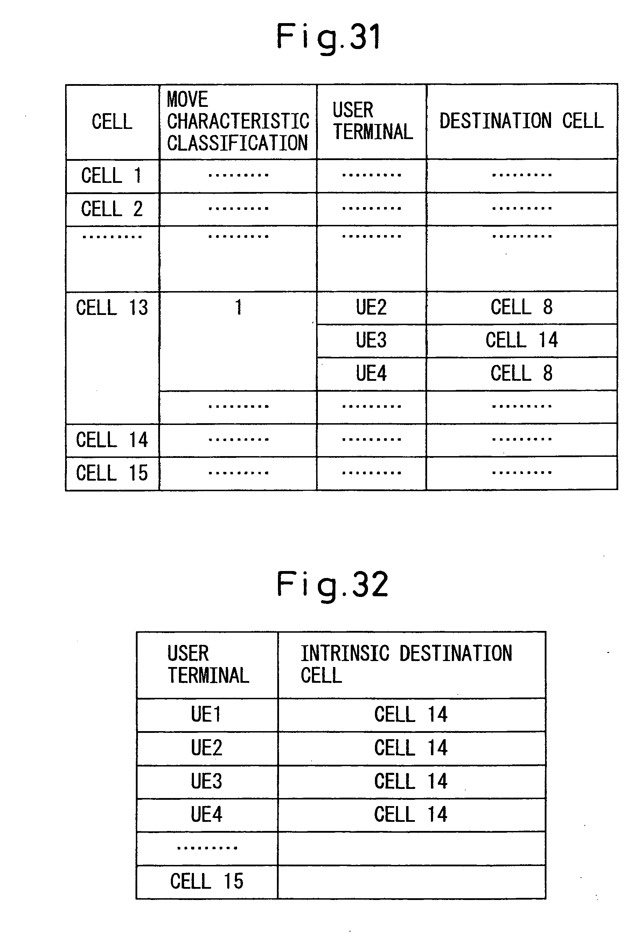

Thereafter, handover record data are updated triggered by the completion of handover of UE2, UE3, and UE4. The handover recording unit 430 refers to the handover record correction data (refer to Fig. 32), updates the data using the cells to be selected, and detects continuous move characteristics of the user terminals UE1, UE2, UE3, and UE4.

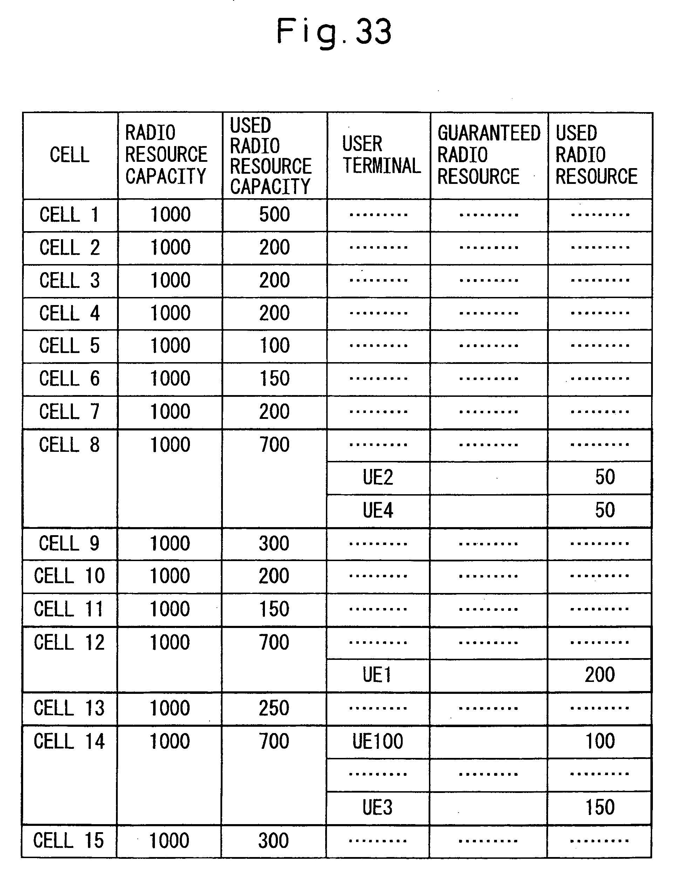

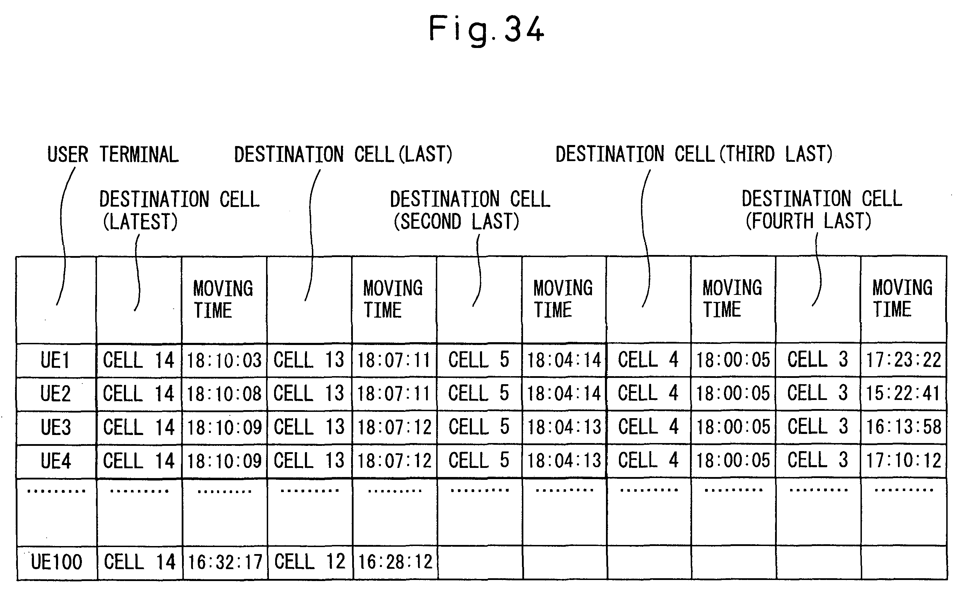

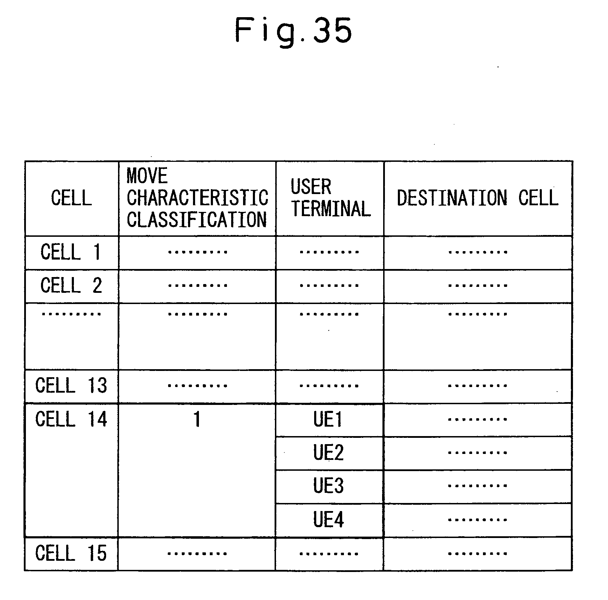

The radio resource management table, the handover record data, and the data classified according to the move characteristics are finally updated for each radio base station, as shown in Fig. 33, Fig. 34, and Fig. 35, respectively. As a result, it becomes possible to avoid congestion in the cell 14, and can make uniform the radio resources used in the cell 8, the cell 12, and the cell 13 that form the periphery cells.

### Fifth Example

A fifth example is a sharing of radio resources due to congestion in a radio station triggered by a call setting according to the fifth embodiment of the present invention.

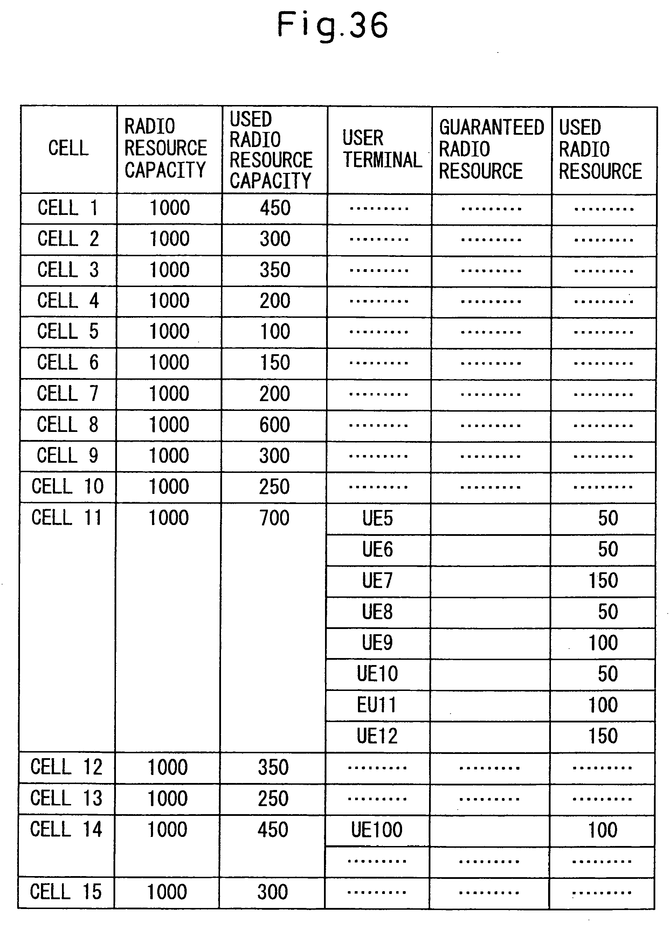

It is assumed that, as shown in Fig. 36, the user terminals UE5 to UE12 are present in the cell 11 as shown in the table of radio resource management for each user terminal that is managed by the radio base station resource managing unit 320, and that data classified according to radio field intensity characteristics are as prepared in the second embodiment as shown in Fig. 24. It is also assumed that a condition for detecting congestion in a radio base station is that the using rate of radio resources in the radio base station is at least 80 percent.

In the above state, it is assumed that the user terminal UE13 transmits a request for call setting, to the effect that the connection-destination radio base station BS11 is present in the cell 11, and that the requested radio resource volume is 100.

The call controller 200 transmits a resource acquisition request to the radio resource controller 300, using necessary information (i.e., the user terminal is UE13, the connection-destination radio base station is in the cell 11, and that the requested radio resource volume is 100) based on the call setting request received from the external IF 100.

The radio resource controller 300 transmits the resource acquisition request to the radio resource allocating unit 310, in order to secure the radio resources requested from the user terminal. The radio resource allocating unit 310 compares the idle radio resources 300 in the cell 11 with the radio resources 100 requested from the user terminal UE13, and decides that the resources can be acquired. When it is decided that the resources can be acquired, the radio resource controller 300 transmits a resource updating request to the radio base station resource managing unit 320, and also transmits a resource acquisition response to the call controller 200.

At the time of updating the data for the cell 11 in the radio resource management table, total volume of radio resources used becomes 800, the using rate of the radio resources becomes 80 percent as a result, and this percentage is equal to the predetermined congestion threshold value 80 percent. Therefore, the radio base station resource managing unit 320 decides that the resources in the cell 11 are in the congested state. The radio base station resource managing unit 320 refers to the peripheral cell information database 510, and understands that radio base stations at the periphery of the cell 11 to which the user terminal can be handed over are in the cell 1, the cell 2, the cell 3, the cell 10, the cell 12, and the cell 14. In order to avoid congestion in the cell 11, the radio base station resource managing unit 320 transmits a resource sharing request to the radio resource sharing unit 330, using the cell 11 in which the congested radio base station is present, the cell 1, the cell 2, the cell 3, the cell 10, the cell 12, and the cell 14 in which the peripheral radio base stations are present, and radio field intensity characteristics, as additional information. In this case, the characteristics assigned as the additional information are determined beforehand in the station condition or the like. While it is also possible to assign a classification according to the QoS characteristics explained in the third example, a resource sharing according to the radio field intensity characteristics is explained in the present example.

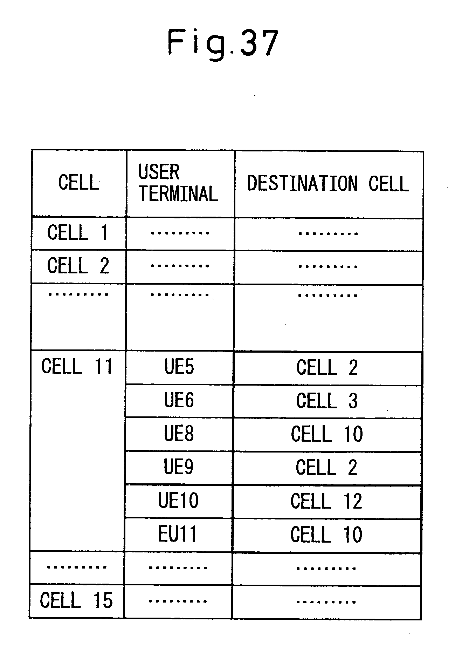

The radio resource sharing unit 330 receives the resource sharing request according to the radio field intensity characteristics in the cell 11, and determines radio base stations to which the user terminals are to move so that the radio resources used in the congested cell 11 and its adjacent cells including the cell 1, the cell 2, the cell 3, the cell 10, the cell 12, and the cell 14 become uniform, based on the states of the radio resources used in the cells assigned in the additional information, and the states of the radio resources used by the user terminals UE5, UE6, UE8, UE9, UE10, and UE11 that are classified into the cell 11 of the data (refer to Fig. 24) classified according to the radio field intensity characteristics, by referring to the table of wave resource management for each cell. The radio resource sharing unit 330 also updates the data (refer to Fig. 37) classified according to the radio field intensity characteristics, and responds the resource sharing to the radio base station resource managing unit 320.

The radio base station resource managing unit 320 transmits a characteristic handover request to the user-terminal by-character handover processing unit 420, by using cell 11 as radio base station information and radio field intensity characteristics as assigned characteristics, as additional information.

The user-terminal by-character handover processing unit 420 first requests the handover implementing unit 410 to hand over the user terminal UE5 to the cell 2 in which the destination radio base station is present, based on the cell 11 classification information in the data classified according to the radio field intensity characteristics.

Next, the user-terminal by-character handover processing unit 420 requests the handover implementing unit 410 to hand over the user terminals UE6, UE8, UE9, UE10, UE11, and UE12 that are classified into the cell 11 in the data classified according to the radio field intensity characteristics.

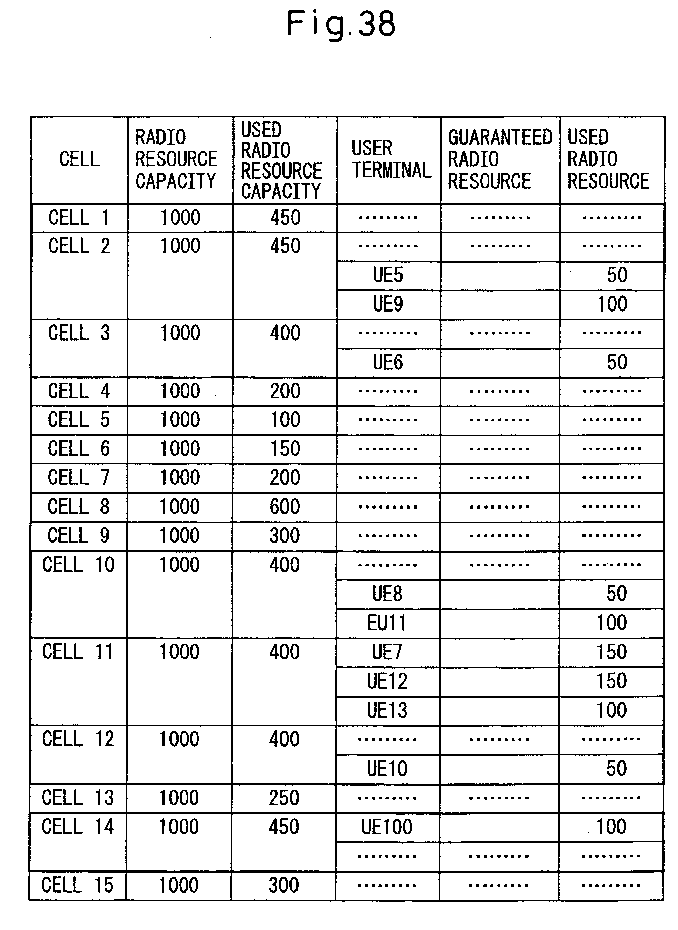

When the handover of the last user terminal UE12 is completed, the table of radio resource management for each radio base station becomes as shown in Fig. 38. Congestion in the cell 11 is avoided. Further, radio resources used in the peripheral cells including the cell 1, the cell 2, the cell 3, the cell 10, the cell 12, and the cell 14 of the radio base stations are made uniform. As a result, it becomes possible to effectively utilize radio resources in the radio access network (RAN).

After the handover according to characteristics is completed, it is checked whether user terminals are classified into data according to radio field intensity characteristics. When the user terminals are classified into data according to radio field intensity characteristics, the user terminals can be deleted from the classified data.

### Sixth Example

A sixth example is a radio resource sharing control triggered by a handover completion according to the sixth embodiment of the present invention.

A condition for detecting congestion in a radio base station is that the using rate of radio resources in the radio base station is at least 80 percent like in the fourth and the fifth examples.

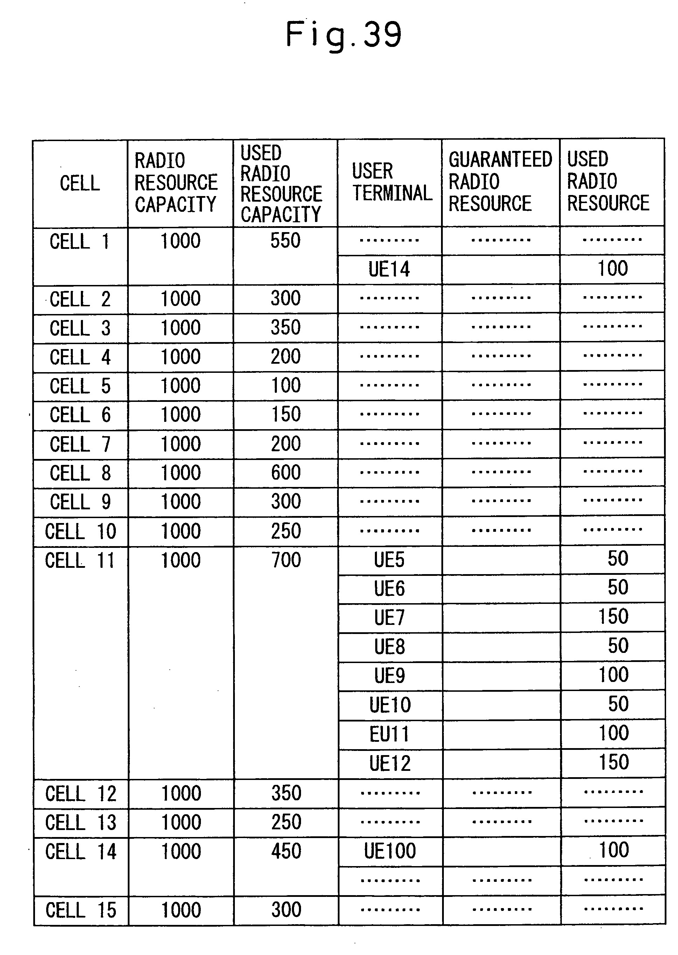

It is also assumed that the eight user terminals UE5, UE6, UE7, UE8, UE9, UE10, UE11, and UE12 belong to the cell 11, as in the fifth example. The table of radio resource management for each user terminal managed by the radio base station resource managing unit 320 is as shown in Fig. 39. Data classified according to radio field intensity characteristics are as generated in the second example as shown in Fig. 24.

It is assumed that the call controller 200 receives a notice of completion of handover of the user terminal UE14 from the cell 1 to the cell 11.

The call controller 200 transmits a notice of completion of handover of the user terminal UE14 to the cell 11, to both the radio resource controller 300 and the handover controller 400. The radio resource controller 300 transmits the handover completion notice of the same contents to the radio base station resource managing unit 320, in order to update the table of radio resource management in the cell 1 and the cell 11.

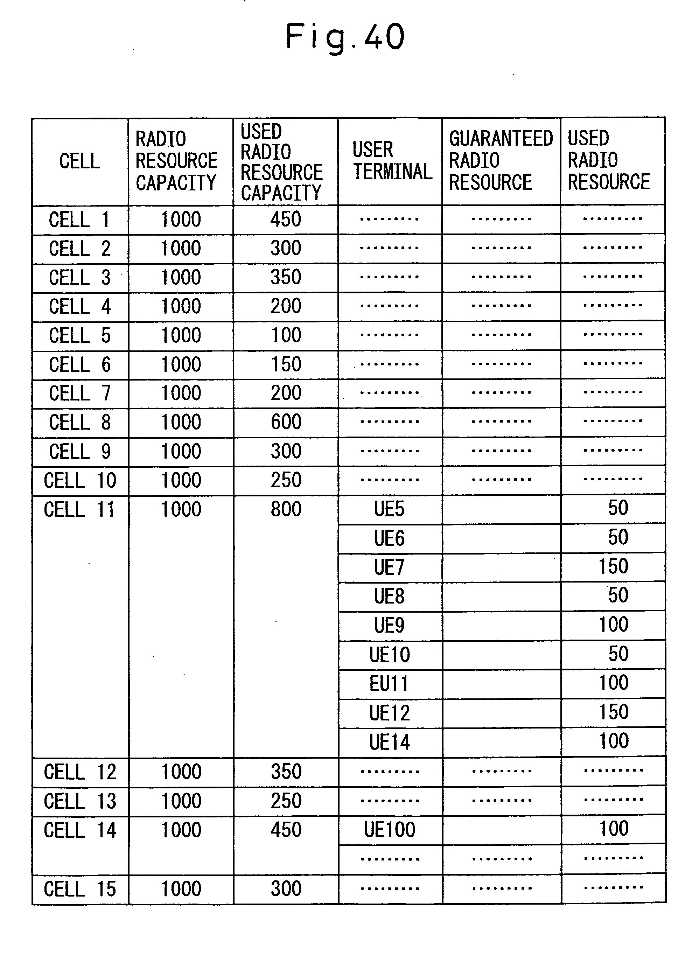

The radio base station resource managing unit 320 updates the table of radio resource management for each radio base station, as shown in Fig. 40. Because the radio resources used in the cell 11 becomes 800 and the using rate of the radio resources becomes at least 80 percent, the radio base station resource managing unit 320 forecasts that the cell 11 is congested. The radio base station resource managing unit 320 refers to the peripheral cell information database 510, and detects that radio base stations at the periphery of the cell 11 to which the user terminal can be handed over are in the cell 1, the cell 2, the cell 3, the cell 10, the cell 12, and the cell 14. In order to avoid congestion in the cell 11, the radio base station resource managing unit 320 transmits a resource sharing request to the radio resource sharing unit 330, using the cell 11 in which the congested radio base station is present, the cell 1, the cell 2, the cell 3, the cell 10, the cell 12, and the cell 14 in which the peripheral radio base stations are present, and radio field intensity characteristics, as additional information.

The subsequent resource sharing operation is similar to that in the sixth example. The handover controller 400 receives the handover completion notice, and detects move characteristics in a similar manner to that in the first example.

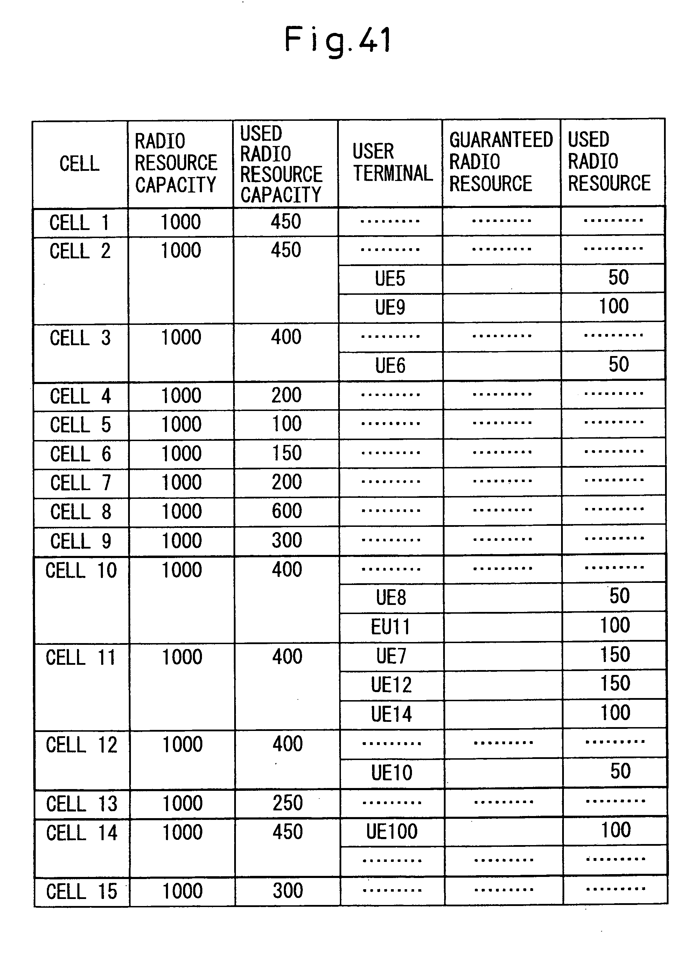

Finally, the table of radio resource management for each radio base station becomes as shown in Fig. 41. Congestion in the cell 11 is avoided. Further, radio resources used in the peripheral cells including the cell 1, the cell 2, the cell 3, the cell 10, the cell 12, and the cell 14 of the radio base stations are made uniform. As a result, it becomes possible to effectively utilize radio resources in the radio access network (RAN).

### Seventh Example

A seventh example is a method of sharing radio resources using idle areas of the QoS guarantee band according to the seventh embodiment of the present invention.

A condition for detecting congestion in a radio base station is the same as that in the fourth, fifth, and sixth examples.

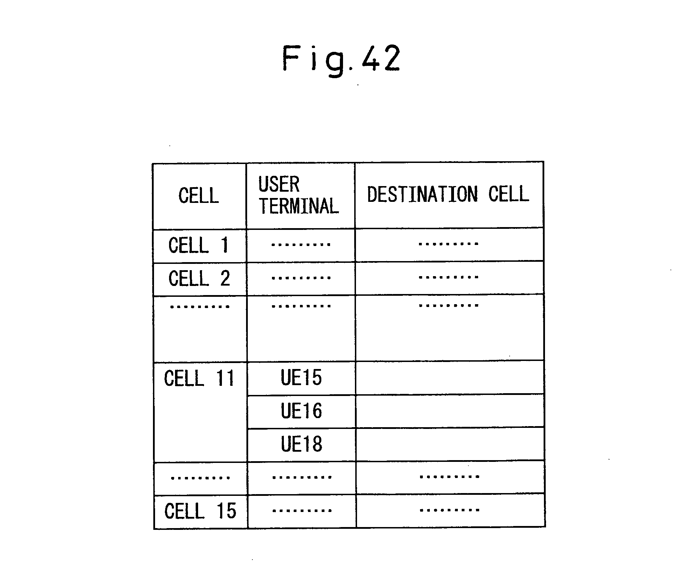

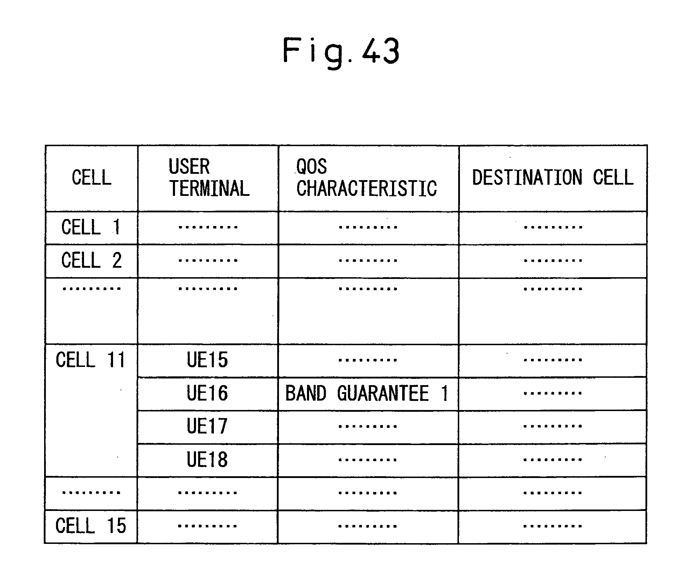

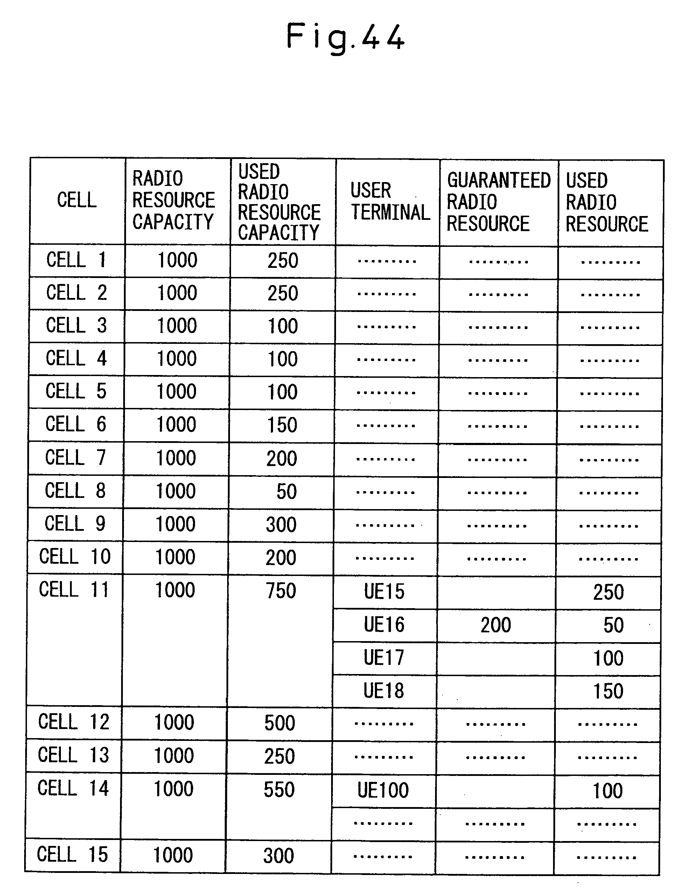

It is assumed that data classified according to radio field intensity characteristics are as shown in Fig. 42, and that data classified according to QoS are as shown in Fig. 43. The table of radio resource management for each user terminal managed by the radio base station resource managing unit 320 is as shown in Fig. 44.

It is assumed that four user terminals UE15, UE16, UE17, and UE18 belong to the cell 11, and UE16 carries out band-guaranteed communications.

In the above state, it is assumed that the user terminal UE16 transmits a request, for call setting, to the effect that the connection-destination radio base station is present in the cell 11, and that the requested radio resource volume is 100.

The call controller 200 transmits a resource acquisition request to the radio resource controller 300, using necessary information (i.e., the call-setting requesting user terminal is UE19, the connection-destination radio base station is present in the cell 11, and that the requested radio resource volume is 100) based on the call setting request received from the external IF 100.

The radio resource controller 300 transmits the resource acquisition request to the radio resource allocating unit 310, in order to secure the radio resources requested from the user terminal. The radio resource allocating unit 310 compares the idle radio resources 250 in the cell 11 with the radio resources 100 requested from the user terminal UE19, and decides that the resources can be acquired. The radio resource controller 300 transmits a resource updating request to the radio base station resource managing unit 320, and also transmits a resource acquisition response to the call controller 200.

At the time of updating the data for the cell 11 in the radio resource management table, total volume of radio resources used becomes 850, the using rate of the radio resources becomes 85 percent as a result, and this percentage exceeds the predetermined congestion threshold value 80 percent. Therefore, the radio base station resource managing unit 320 decides that the resources in the cell 11 are in a congested state. In order to avoid congestion in the cell 11, the radio base station resource managing unit 320 transmits radio field intensity characteristics in the cell 11 and a resource sharing request based on the QoS band sharing, to the radio resource sharing unit 330.

Because the QoS band sharing is added to the resource sharing request, the radio resource sharing unit 330 transmits a QoS-guaranteed user terminal enquiry, regarding the cell 11, to the user terminal characteristic classification controller 800.

The user terminal characteristic classification controller 800 transmits the QoS-guaranteed user terminal enquiry regarding the cell 11, to the QoS band characteristic classifying unit 830.

The QoS band characteristic classifying unit 830 searches all user terminals that are classified according to the radio field intensity characteristics in the cell 11 for QoS band-guaranteed user terminals, and transmits a response to the QoS band-guaranteed user terminal enquiry, to the radio resource sharing unit 320, using the user terminal UE16 as additional information.

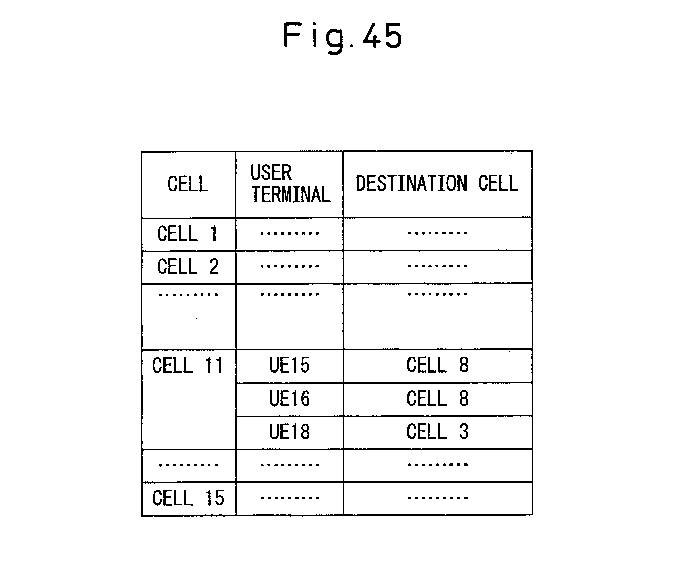

The radio resource sharing unit 320 recognizes the presence of the band-guaranteed user terminal UE16, and decides whether the idle resources 150 of the user terminal UE16 can be shared by band-not-guaranteed user terminals having the same radio field intensity characteristics. As a result, it can be determined that the user terminal UE18, that uses radio resources to the same volume as that of the idle resources, can share the idle resources. Radio base stations to which the user terminals UE15, UE16, and UE18 classified according to the radio field intensity characteristics move are selected so that the radio resources used in the peripheral radio base stations become uniform, by taking into account the resource sharing by the user terminals UE16 and UE18. As a result, data classified according to the radio field intensity characteristics become as shown in Fig. 45.

Because the resources not used by the QoS band-guaranteed user terminals can be effectively utilized, it is possible to avoid congestion in the radio base station due to presence of a large volume of unused radio resources. As a result, radio resources in the radio access network (RAN) can be effectively utilized.

## Claims

1. A method of controlling a sharing of radio resources by a radio network controller in a mobile communication network, wherein
the radio network controller detects characteristics of mobile devices that are wireless connected to radio base stations managed by the radio network controller, and
decides whether the mobile devices can be classified into at least one group according to the detected characteristics, and
when it is decided that the mobile devices can be classified into at least one group, radio base stations to which the mobile devices are to be wireless connected are changed such that radio resources of the radio base stations can be uniformly used according to the classified group, thereby sharing the radio resources of the radio stations.

2. The method of controlling a sharing of radio resources according to claim 1, wherein
the characteristic of the mobile device is move record information that shows moves of the mobile device between the radio base stations.

3. The method of controlling a sharing of radio resources according to claim 1, wherein
the characteristic of the mobile device is radio field intensity received by the mobile device.

4. The method of controlling a sharing of radio resources according to claim 1, wherein
the characteristic of the mobile device is
quality-of-service information of the mobile device.

5. The method of controlling a sharing of radio resources according to any one of claims 1 to 4, wherein
the radio network controller determines radio base stations to which the mobile devices are to be connected so as to avoid congestion in the radio base station, by utilizing the detected characteristics of the mobile devices, and hands over the mobile devices to the radio base stations at the determined connection destinations.

6. The method of controlling a sharing of radio resources according to claim 5, wherein
the characteristic of the mobile device is quality-of-service information of the mobile device,
it is decided whether an idle band is present in a band where the quality of service is guaranteed, according to a state of congestion in the radio base station and the band used by the mobile device, and
when an idle band is present in the quality-of- service guaranteed band as a result of the decision made, mobile devices that are classified according to the characteristic of the mobile device share the radio resources in the idle band.

7. The method of controlling a sharing of radio resources according to claim 5, wherein
when a handover to a destination radio base station determined according to the sharing of radio resources is completed, a record of a move to a destination radio base station is stored in a radio base station that is intrinsically selected according to quality-of-service information of a mobile device, not in a radio base station that is determined according to the sharing of radio resources.

8. The method of controlling a sharing of radio resources according to claim 5, wherein
when one of mobile devices that are grouped according to move characteristics of mobile devices is handed over, and when it is forecast that all mobile devices in the group are handed over together and when it is forecast that congestion occurs in the destination radio base station due to the mass handover, then the user terminals in the group are handed over to other radio base stations having an allowance in radio resources.

9. The method of controlling a sharing of radio resources according to claim 5, wherein
when it is forecast that congestion occurs in a radio base station that is requested at a call setting request, mobile stations that are grouped according to move characteristics of the mobile devices are handed over to other radio base stations determined in advance.

10. The method of controlling a sharing of radio resources according to claim 5, wherein
mobile devices that are fixedly present in one radio base station are grouped according to characteristics of the mobile devices, and when it is forecast that congestion occurs in the radio base station upon completing a handover of one mobile device, the mobile devices in the group are handed over to other radio base stations determined in advance.

11. A radio resource sharing controller in a radio network controller in a mobile communication network, the radio resource sharing controller comprising:
a mobile device characteristic detecting unit that detects characteristics of mobile devices that are wireless connected to radio base stations managed by the radio network controller;
a deciding unit that decides whether the mobile devices can be classified into at least one group according to the detected characteristics; and
a handover controller that changes radio base stations to which the mobile devices are to be wireless connected such that radio resources of the radio base stations can be uniformly used according to a classified group, when it is decided that the mobile devices can be classified into at least one group, thereby sharing the radio resources of the radio stations.

12. The radio resource sharing controller according to claim 11, wherein
the mobile device characteristic detecting unit is a move record information detector that detects moves of the mobile device between the radio base stations.

13. The radio resource sharing controller according to claim 11, wherein
the mobile device characteristic detecting unit is a detector of radio field intensity received by the mobile device.

14. The radio resource sharing controller according to claim 11, wherein
the mobile device characteristic detecting unit is a detector of quality-of-service information of the mobile device.

15. The radio resource sharing controller according to any one of claims 11 to 14, wherein
the handover controller determines radio base stations to which the mobile devices are to be connected so as to avoid congestion in the radio base station, by utilizing the detected characteristics of the mobile devices, and hands over the mobile devices to the radio base stations at the determined connection destinations.

16. The radio resource sharing controller according to claim 15, wherein
the mobile device characteristic detecting unit detects quality-of-service information of the mobile device, and decides whether an idle band is present in a band where the quality of service is guaranteed, according to a state of congestion in the radio base station and the band used by the mobile device, and
when an idle band is present in the quality-of- service guaranteed band as a result of the decision, mobile devices that are classified according to the characteristic of the mobile device share the radio resources in the idle band.

17. The radio resource sharing controller according to claim 15, wherein
the handover controller has a handover recording unit that stores a record of move to a destination radio base station into a radio base station that is intrinsically selected according to quality-of-service information of a mobile device, not into a radio base station that is determined according to the sharing of radio resources, when a handover to a destination radio base station, determined according to the sharing of radio resources, is completed.

18. The radio resource sharing controller according to claim 15, wherein
when one of mobile devices that are grouped according to move characteristics of mobile devices is handed over, and when it is forecast that all mobile devices in the group are handed over together and when it is forecast that congestion occurs in the destination radio base station due to the mass handover, the handover controller hands over the user terminals in the group to other radio base stations having an allowance in radio resources.

19. The radio resource sharing controller according to claim 15, wherein
when it is forecast that congestion occurs in a radio base station that is requested at a call setting request, the handover controller hands over mobile stations that are grouped according to move characteristics of the mobile devices to other radio base stations determined in advance.

20. The radio resource sharing controller according to claim 15, wherein
the handover controller groups mobile devices that are fixedly present in one radio base station according to characteristics of the mobile devices, and when it is forecast that congestion occurs in the radio base station upon completing a handover of one mobile device, the handover controller hands over the mobile devices in the group to other radio base stations determined in advance.
